(19) **Europäisches Patentamt European Patent Office Office européen des brevets**

(11) **EP 4 265 436 B1**

(12) **EUROPEAN PATENT SPECIFICATION**

(45) Date of publication and mention
of the grant of the patent:
**09.07.2025 Bulletin 2025/28**

(21) Application number: **23163472.6**

(22) Date of filing: **22.03.2023**

(51) International Patent Classification (IPC):
**B60C 1/00** $^{(2006.01)}$ **B60C 11/00** $^{(2006.01)}$

(52) Cooperative Patent Classification (CPC):
**B60C 1/0016; B60C 11/0041; B60C 2011/0025;**
**B60C 2200/10**

(54) **MOTORCYCLE TIRE**

MOTORRADREIFEN

PNEU DE MOTOCYCLETTE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.04.2022 JP 2022070816**
**30.01.2023 JP 2023012050**

(43) Date of publication of application:
**25.10.2023 Bulletin 2023/43**

(73) Proprietor: **Sumitomo Rubber Industries, Ltd.
Kobe-shi, Hyogo 651-0072 (JP)**

(72) Inventor: **IKAI, Takuma
Chuo-ku, Kobe-shi, 651-0072 (JP)**

(74) Representative: **TBK
Bavariaring 4-6
80336 München (DE)**

(56) References cited:
**US-A1- 2004 244 894      US-A1- 2014 378 575
US-B2- 9 248 702**

**Description**

TECHNICAL FIELD

The present invention relates to a motorcycle tire.

BACKGROUND OF THE INVENTION

In a motorcycle tire, since a center part of its tread rubber mainly comes into contact with a road surface during straight running, and a shoulder part of the tread rubber mainly comes into contact with the road surface during turning, each of these parts is required to have performance depending on its circumstance. Accordingly, in the tread rubber of the motorcycle tire, its center part and shoulder part are often varied in properties of rubber compositions constituting these parts (JP 2011-189808 A).

US 2014/378575 A1 discloses a rubber composition based on at least one diene elastomer, a reinforcing filler comprising at least carbon black having a CTAB specific surface greater than or equal to 130 m²/g, a plasticizing oil and also a crosslinking system, the dispersion of the filler in the elastomeric matrix having a Z score greater than or equal to 70.

US 9248702B2 discloses a two-wheeled automotive vehicle tire including a tread portion having an outer surface that extends so as to be curved such that the outer surface is convex outward in the tire radial direction, and is arc-shaped. The tread rubber 2G includes a center rubber CR, shoulder rubbers SH and a middle rubber MD. The center rubber CR includes a center cap layer CRc and a center base layer CRb. The loss tangent of the center base layer CRb and the width L1b thereof in the tire axial direction are each limited so as to be set within a predetermined range.

US 2004/244894 A1 discloses a two-piece tire assembly having a removable tread belt 12 for installing about the circumference of the tire carcass 14. The tread belt has a pair of lateral ends each axially extending beyond the inflated unloaded carcass 14 at the circumferential surface by a distance of at least 4% of the width as measured at the tread belt 12 and the carcass 14 interface. The carcass 14 has an abrasion resistant rubber layer 82 at the tread belt interface. The tread belt 12 also has the abrasion resistant tread compound 82 at the carcass 14 interface. The tread belt 12 has a tread portion 80 that includes a tread cap 80A and a tread base 80B.

SUMMARY OF THE INVENTION

However, when the center part and the shoulder part are varied in properties of rubber compositions, peeling easily occurs due to stress concentration on the interface between them. It is an object of the present invention to provide a motorcycle tire in which, in a case where a tread part comprises a center part and a pair of shoulder parts, peeling resistance on the interface between the center part and each of the shoulder parts is improved.

The present invention relates to:

a motorcycle tire comprising a tread part,
the tread part comprising

a center part having a tire equator, and
a pair of shoulder parts having tread grounding ends,

wherein a rubber composition constituting the center part comprises a filler (C), the filler (C) comprising silica, and a ratio of silica in the filler (C) is greater than 50% by mass,
wherein a rubber composition constituting the shoulder parts comprises a filler (S), the filler (S) comprising carbon black, and a ratio of carbon black in the filler (S) is greater than 50% by mass, and
wherein, when a loss tangent at 70°C of the rubber composition constituting the center part is defined as 70°C tan $\delta$(c), a complex elastic modulus at 0°C of the rubber composition constituting the center part is defined as 0°CE*(c), a loss tangent at 70°C of the rubber composition constituting the shoulder parts is defined as 70°C tan $\delta$(s), and a complex elastic modulus at 0°C of the rubber composition constituting the shoulder parts is defined as 0°CE*(s), 70°C tan $\delta$(c) and 70°C tan $\delta$(s) satisfy the following inequality (1) and 0°CE*(c) and 0°CE*(s) satisfy the following inequality (2).

$$(1)\ 1.30 < 70°C\ \tan\ \delta(s)\ /\ 70°C\ \tan\ \delta(c)$$

$$(2)\ 0°CE^*(s)\ /\ 0°CE^*(c) < 1.50$$

According to the present invention, a motorcycle tire can be provided in which, in a case where a tread part comprises a center part and a pair of shoulder parts, peeling resistance on the interface between the center part and each of the shoulder parts is improved.

BRIEF DESCRIPTION OF THE DRAWINGS

FIG. 1 is one example of a drawing schematically illustrating a tire meridian cross section of a motorcycle tire.
FIG. 2 is one example of a drawing schematically illustrating a tire meridian cross section in a state where a motorcycle tire comes into contact with a road surface (a case where the center part falls within a grounding surface).
FIG. 3 is one example of a drawing schematically illustrating a tire meridian cross section in a state where a motorcycle tire comes into contact with a road surface (a case where the center part extends up to the outside of the grounding surface).

DETAILED DESCRIPTION

The motorcycle tire of the present invention is a motorcycle tire comprising a tread part, the tread part comprising a center part having a tire equator, and a pair of shoulder parts having tread grounding ends, wherein a rubber composition constituting the center part comprises a filler (C), the filler (C) comprising silica, and a ratio of silica in the filler (C) is greater than 50% by mass, wherein a rubber composition constituting the shoulder parts comprises a filler (S), the filler (S) comprising carbon black, and a ratio of carbon black in the filler (S) is greater than 50% by mass, and wherein, when a loss tangent at 70°C of the rubber composition constituting the center part is defined as 70°C tan $\delta$(c), a complex elastic modulus at 0°C of the rubber composition constituting the center part is defined as 0°CE*(c), a loss tangent at 70°C of the rubber composition constituting the shoulder parts is defined as 70°C tan $\delta$(s), and a complex elastic modulus at 0°C of the rubber composition constituting the shoulder parts is defined as 0°CE*(s), 70°C tan $\delta$(c) and 70°C tan $\delta$(s) satisfy the following inequality (1), and 0°CE*(c) and 0°CE*(s) satisfy the following inequality (2).

$$(1)\ 1.30 < 70°C\ \tan\ \delta(s)/70°C\ \tan\ \delta(c)$$

$$(2)\ 0°CE^*(s)/0°CE^*(c) < 1.50$$

A mechanism by which peeling on the interface between the center part and each of the shoulder parts is suppressed in the present invention is considered as follows, although it is not intended to be bound by any theory.
In the present invention, the center part comprises a filler (C) in which a ratio of silica is greater than 50% by mass, and each of the shoulder parts comprises a filler (S) in which a ratio of carbon black is greater than 50% by mass. A temperature of the center part easily becomes high due to deformation of the center part during a rolling motion, and thus it is considered that a deformation amount of a rubber surface easily increases when the tire is tilted. Since silica tends to easily keep elongation at break of a rubber composition high as compared with other fillers, it is considered that abrasion of the center part with a road surface in a case of application of large deformation can be suppressed. Moreover, since carbon black has high reinforcing property for a rubber, it is considered that, when the shoulder parts that are cooled during straight running come into contact with the ground during turning, early abrasion of the shoulder parts is suppressed. As a result, abrasion of the center part and abrasion of the shoulder parts in the vicinity of the interface are suppressed, and thus it is considered that the suppression of abrasion of these parts can make it possible for the interface to hardly catch on a road surface.
On the other hand, there is generally a concern about peeling of the interface at the boundary between the center part and shoulder part each having a different main component of a filler. However, in the present invention, as in the above-described inequality (1), heat generation of the shoulder parts is increased so as to have a certain ratio or more compared with that of the center part. Therefore, when the shoulder parts that are cooled during straight running are heated during turning, a rate at which the shoulder parts are heated becomes high, which is thus considered to dominantly act on suppression of peeling on the interface. Moreover, in the present invention, as in the above-described inequality (2), E* at a low temperature of the shoulder part corresponding to a high frequency is decreased so as to have a certain ratio or less compared with that of the center part. Therefore, at the instant when the shoulder parts come into contact with the ground at high speed, stress concentration on the interface is reduced in a state where the shoulder parts are cooled and there is also an influence of a slip, which is thus considered to dominantly act on suppression of peeling on the interface. Additionally, with cooperation of these features, it is considered that peeling of the interface during turning, particularly, during turning in high-speed running, is suppressed since suppression of peeling of the interface can be maintained from a state where the shoulder parts are cooled immediately after the contact with the ground to a state where the shoulder parts are heated thereafter by heat generation.

A thickness D of an interface part between the center part and each shoulder part on a tire meridian cross section is preferably greater than 4.0 mm and less than 10.0 mm.

When the interface part has a thickness equal to or larger than a certain value, a sufficient heat generation is obtained, which is considered to be advantageous for suppression of peeling on the interface. On the other hand, when the thickness of the interface part is reduced to be equal to or less than a certain value, rigidity of the entire tread part is increased and an amount of deformation on the interface between the center portion and each shoulder part can be reduced, which is considered to be advantageous for suppression of peeling on the interface.

A rubber component in the rubber composition constituting the shoulder parts preferably comprises greater than 70% by mass of a styrene-butadiene rubber.

When an amount of the styrene-butadiene rubber is set to be equal to or greater than a certain value, a sufficient heat generation is obtained at the shoulder part, the interface part is easily heated and becomes flexible, which is thus considered to be advantageous for suppression of peeling on the interface.

The styrene-butadiene rubber preferably comprises a solution-polymerized styrene-butadiene rubber and an emulsion-polymerized styrene-butadiene rubber.

In the solution-polymerized styrene-butadiene rubber, a uniform weight-average molecular weight is easily obtained, and breaking strength of the entire rubber component is easily improved. On the other hand, since the emulsion-polymerized styrene-butadiene rubber comprises a polymer component whose molecular weight is higher than that of the solution-polymerized styrene-butadiene rubber, it is considered that it is excellent in strength against a locally large deformation. Accordingly, these styrene-butadiene rubbers are preferably used in combination.

A content of the filler (S) in the rubber composition constituting the shoulder parts is preferably greater than 50 parts by mass based on 100 parts by mass of the rubber component.

When the content of the filler is set to be equal to or greater than a certain value, a sufficient heat generation is obtained at the shoulder part, the interface part is easily heated and becomes flexible, which is thus considered to be advantageous for suppression of peeling on the interface.

A content of carbon black in the rubber composition constituting the shoulder parts is preferably greater than 50 parts by mass based on 100 parts by mass of the rubber component.

When the content of carbon black is set to be equal to or greater than a certain amount, a sufficient heat generation is obtained at the shoulder part, the interface part is easily heated and becomes flexible, which is thus considered to be advantageous for suppression of peeling on the interface.

The rubber composition constituting the shoulder parts preferably comprises greater than 5 parts by mass and less than 40 parts by mass of resin based on 100 parts by mass of the rubber component.

When the content of resin is set to be within a certain range, a sufficient heat generation is obtained at the shoulder part, the interface part is easily heated and becomes flexible, which is thus considered to be advantageous for suppression of peeling on the interface. Moreover, it is considered that a slip relative to a road surface is also easily suppressed with adhesiveness of the resin component.

The resin preferably comprises an aromatic resin.

When a content of the aromatic resin is set to be within a certain range, a sufficient heat generation is obtained at the shoulder part, the interface part is easily heated and becomes flexible, which is thus considered to be advantageous for suppression of peeling on the interface.

A content of the filler (C) in the rubber composition constituting the center part is preferably greater than 60 parts by mass based on 100 parts by mass of a rubber component.

When the content of the filler in the center part is set to be equal to or greater than a certain value, the rubber component is reinforced by the filler, elongation at break is improved, and it is considered that abrasion of the rubber in the vicinity of the interface when the tire is tilted is easily suppressed.

A content of silica in the rubber composition constituting the center part is preferably greater than 60 parts by mass based on 100 parts by mass of the rubber component.

When the content of silica in the center part is set to be equal to or greater than a certain value, the rubber component is reinforced by the filler, elongation at break is improved, and it is considered that abrasion of the rubber in the vicinity of the interface when the tire is tilted is easily suppressed.

When a thickness (mm) of the interface part between the center part and each shoulder part on the tire meridian cross section is defined as D, D and the above-described 70°C tan $\delta$(s)/70°C tan $\delta$(c) preferably satisfy the following relationship.

$$(3)\ 70°C\ \tan \delta(s)/70°C\ \tan \delta(c)/D \geq 0.18$$

When the thickness of the interface part is reduced while increasing heat generation caused by the shoulder parts, a sufficient heat generation is obtained, the interface part is easily heated and becomes flexible, which is thus considered to be advantageous for suppression of peeling on the interface.

Among angles formed between a junction line on the interface between the center part and each shoulder part and a tangent line drawn at an intersection at which the junction line and a grounding surface intersect with each other, on the tire meridian cross section, a degree $\alpha$ of a shoulder part-side angle is preferably greater than 90°.

When $\alpha$ is set to be within a range as described above, a rubber of the center part covers rubbers of the shoulder parts during turning, and thus, in relationship with a reaction force applied during turning, it becomes difficult for the interface part to split finely, which is thus considered to be advantageous for suppression of peeling on the interface.

When a tan $\delta$ peak temperature (°C) of the rubber composition constituting the center part is defined as T(c) and a tan $\delta$ peak temperature (°C) of the rubber composition constituting the shoulder parts is defined as T(s), T(c) and T(s) preferably satisfy the following relationship.

$$(4)\ T(c) - T(s) > 0$$

When the peak tan $\delta$ temperature of the shoulder parts is set to be lower than that of the center part, it is considered that heat can be easily generated when the cooled shoulder parts come into contact with the ground, thereby making it possible to easily heat the interface part.

When hardness of the rubber composition constituting the center part is defined as H(c) and hardness of the rubber composition constituting the shoulder parts is defined as H(s), H(c) and H(s) preferably satisfy the following relationship.

$$(5)\ H(s)/H(c) < 1.0$$

The reason is that improvement of grip performance of the shoulder part during turning can be expected.

When stress (MPa) at 300% elongation of the rubber composition constituting the center part is defined as M300(c) and stress (MPa) at 300% elongation of the rubber composition constituting the shoulder parts is defined as M300(s), M300(c) and M300(s) preferably satisfy the following relationship.

$$(6)\ M300(s)/M300(c) < 1.0$$

The reason is that both of high-speed durability during straight running and grip performance during high-speed turning can be expected.

<Definition>

Unless otherwise noted, in the present specification, a size or the like of each part of a tire is defined as a value specified in a standardized state in which the tire is rim-assembled to a standardized rim, filled with air at a standardized internal pressure, and applied with no load. In this regard, sizes on the tire meridian cross section, for example, such as "the thickness D of the interface part" and "the degree $\alpha$", are defined as values specified in a state where the tire cut along the tire meridian cross section is put on a standardized rim.

The "standardized rim" is a rim defined for each tire in a standard system including a standard, on which the tire is based, by the standard, and refers to, for example, a standard rim in applicable sizes described in "JATMA YEAR BOOK" in JATMA (Japan Automobile Tyre Manufacturers Association, Inc), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). Additionally, if the tire is not defined in the above-described standard system, the "standardized rim" refers to a rim having the smallest rim diameter and secondly having the narrowest rim width among rims that can be rim-assembled to the tire and retain internal pressure, that is, rims that do not cause air leakage between the rim and the tire.

A "standardized internal pressure" is an air pressure defined for each tire in a standard system including a standard, on which the tire is based, by each standard, i.e., the "MAXIMUM AIR PRESSURE" in JATMA, the maximum value described in the table "TIRE LOAD LIMITS AT VARIOUS COLD INFLATION PRESSURES" in TRA, or "INFLATION PRESSURE" in ETRTO.

A "standardized load" means a load defined in a standard system including a standard, on which the tire is based. The "standardized load" is the "MAXIMUN LOAD CAPACITY" in the JATMA standard, the maximum value described in the table "TIRE LOAD LIMITS AT VARIOUS COLD INFLATION PRESSURES" in the TRA standard, or "LOAD CAPACITY" in the ETRTO standard.

The "interface" means a boundary surface between the center part and each shoulder part, which come into contact with each other, of the tread.

The "tire meridian cross section" means a cross section obtained by cutting the tire along a plane that passes through the tire meridian.

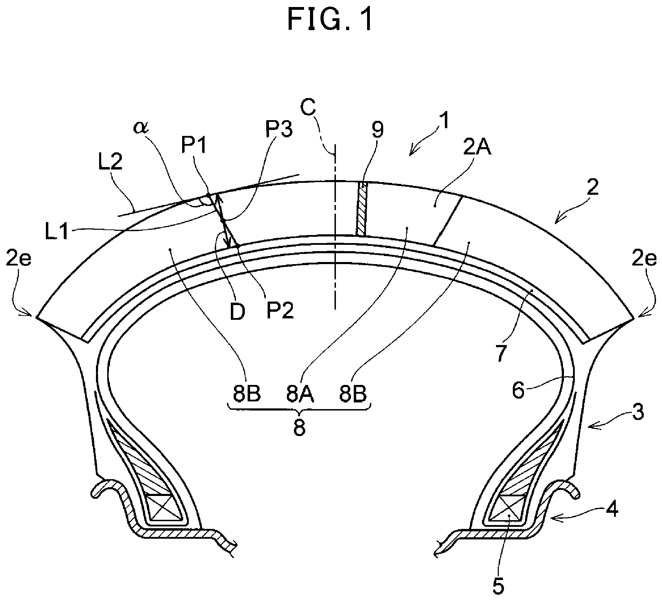

The "junction line" means a line segment joining an end point (P1 in FIG. 1) on the outside of the interface in a tire radial direction and an end point (P2 in FIG. 1) on the inside of the interface in the tire radial direction, on the tire meridian cross section.

The "thickness of the interface part" means a thickness (D in FIG. 1) of the tread part in a direction perpendicular to a tread surface from a midpoint (P3 in FIG. 1) of the junction line on the tire meridian cross section.

The "filler (C)" means a filler contained in the rubber composition constituting the center part.

The "filler (S)" means a filler contained in the rubber composition constituting the shoulder parts.

<Measuring method>

A "70°C tan $\delta$" is a loss tangent measured using EPLEXOR series manufactured by gabo Systemtechnik GmbH under a condition of a temperature at 70°C, a frequency of 10 Hz, an initial strain of 10%, a dynamic strain of 1%, and an extension mode. A vulcanized rubber composition having a length of 20 mm, a width of 4 mm, and a thickness of 1 mm, which is cut out from the tread part of the tire such that a tire circumferential direction becomes a longitudinal direction, is used as a sample for measurement.

A "0°C E*" is a complex elastic modulus measured using EPLEXOR series manufactured by gabo Systemtechnik GmbH under a condition of a temperature at 0°C, a frequency of 10 Hz, an initial strain of 5%, a dynamic strain of 1%, and an extension mode. A vulcanized rubber composition having a length of 20 mm, a width of 4 mm, and a thickness of 1 mm, which is cut out from the tread part of the tire such that a tire circumferential direction becomes a longitudinal direction, is used as a sample for measurement.

A "tan $\delta$ peak temperature of a rubber composition" is determined as a temperature (tan $\delta$ peak temperature) corresponding to the largest value of tan $\delta$ in a temperature distribution curve of tan $\delta$ measured using EPLEXOR series manufactured by gabo Systemtechnik GmbH under a condition of a frequency of 10 Hz, an initial strain of 10%, a dynamic strain of $\pm 0.5\%$, and a temperature rising rate of 2°C/min. A vulcanized rubber composition having a length of 20 mm, a width of 4 mm, and a thickness of 1 mm, which is cut out from the tread part of the tire such that a tire circumferential direction becomes a longitudinal direction, is used as a sample for measurement.

For "hardness of a rubber composition", a sample for measuring hardness, which is cut out from the tread part forming a grounding surface of a test tire so that a tire radial direction became a thickness direction, is prepared, and a type A durometer is pressed against the sample from the grounding surface side to measure hardness in accordance with JIS K 6253.

For M300, a dumbbell-shaped No. 7 specimen with a thickness of 1 mm, which is cut out from inside of a rubber layer of a tread part of each test tire so that a tire circumferential direction becomes a tensile direction, is prepared, and according to JIS K 6251 "Rubber, vulcanized or thermoplastics-Determination of tensile stress-strain properties", a tensile test is performed under a condition of a tensile speed of 3.3 mm/sec in an atmosphere of 23°C to measure stress at 300% elongation (M300) (MPa).

A "styrene content" is calculated by $^1$H-NMR measurement. For example, it is applied for a styrene-containing rubber such as SBR.

A "vinyl bond amount (1,2-bond butadiene unit amount)" is measured by infrared absorption spectrometry. For example, it is applied for a SBR, a BR, and the like.

A "glass transition temperature of a rubber component" is a value measured according to JIS K 7121 using a differential scanning calorimeter (Q200) manufactured by TA Instruments Japan Inc. under a condition of a temperature rising rate of 10°C/min. For example, it is applied for a SBR, a BR, and the like.

A "cis-1,4-bond content (cis content)" is a value calculated by infrared absorption spectrometry. For example, it is applied for a BR and the like.

A "weight-average molecular weight" can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation). For example, it is applied for a SBR, a BR, resin, a liquid polymer, and the like.

A "$N_2SA$ of carbon black" is measured according to JIS K 6217-2 "Carbon black for rubber industry-Fundamental characteristics- Part 2: Determination of specific surface area-Nitrogen adsorption methods-Single-point procedures".

A "DBP oil absorption amount of carbon black" is measured according to JIS K6217-4:2001.

A "$N_2SA$ of silica" is measured by a BET method according to ASTM D3037-93.

A "softening point" is a temperature at which a sphere drops when the softening point specified in JIS K 6220-1: 2001 is measured with a ring and ball softening point measuring device. For example, it is applied for resin and the like.

A "SP value" means a Solubility Parameter calculated based on a structure of a compound by the Hoy method.

The Hoy method is a calculation method described in K. L. Hoy, "Table of Solubility Parameters", Solvent and Coatings Materials Research and Development Department, Union Carbites Corp. (1985). The SP value is applied for, for example, resin and the like.

<Motorcycle Tire>

The motorcycle tire of the present invention will be described below.

[Configuration of tread part]

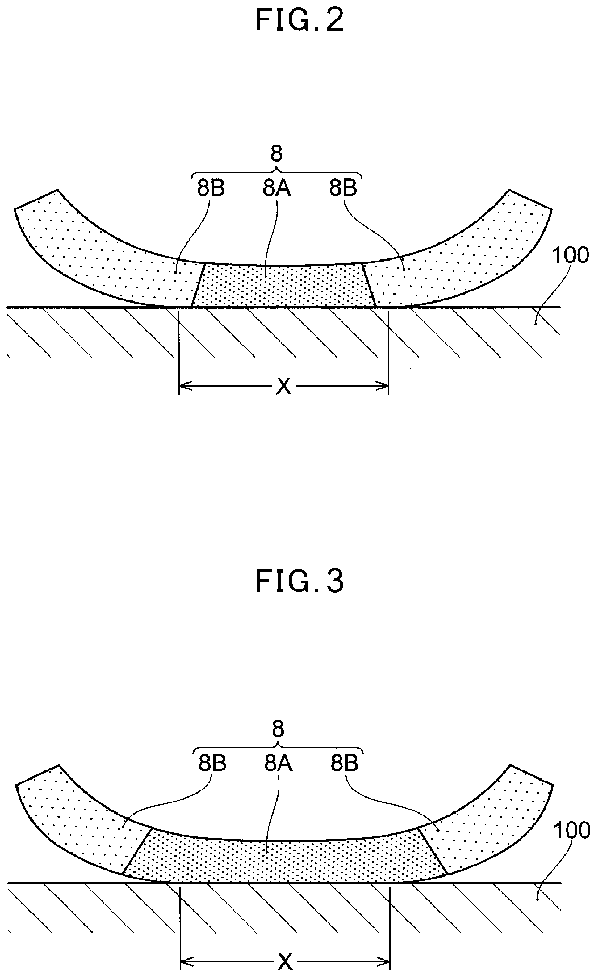

One embodiment of the present invention will be described below with reference to drawings as appropriate. FIG. 1 is one example of a drawing schematically illustrating a tire meridian cross section of a motorcycle tire. (However, descriptions of grooves provided on a tread surface are omitted in FIG. 1. The same applies to FIGS. 2 and 3.) A motorcycle tire 1 comprises a carcass 6 extending from a tread part 2 through a side wall part 3 to a bead core 5 of a bead part 4, and a belt layer 7 disposed outside this carcass 6 in a tire radial direction and inside the tread part 2. On the above-described cross section, a tread surface 2A of the tread part 2 coming into contact with a road surface is convex on the outside in the tire radial direction and extends while being curved in an arc. Moreover, outer ends of the tread surface 2A in a tire axial direction are tread grounding ends 2e.

In the motorcycle tire, the tread part comprises a center part having a tire equator, and a pair of shoulder parts having tread grounding ends. Therefore, the tread part is divided into at least three parts, and preferable embodiments include such a tread part divided into three parts. Besides, the center part may be further divided as long as it is composed of a rubber composition satisfying the above-described predetermined requirements. Likewise, each of the pair of shoulder parts also may be further divided as long as it is composed of a rubber composition satisfying the above-described predetermined requirements. Therefore, examples of the tread part include a tread part divided into four parts, five parts, or more parts. In a case where the tread part is divided into even-numbered parts of four or more, the tread part should satisfy the relationship between a center part and a shoulder part of the present invention at an interface other than the interface around a central part. In a case where the tread part is divided into odd-numbered parts, on the other hand, the tread part may satisfy the relationship between a center part and a shoulder part of the present invention at any interface, preferably, at an interface that is nearest to each tread grounding end 2e.

In FIG. 1, in the tread part 2, a tread rubber 8 is arranged on the outside of the belt layer 7 in the radial direction. In the present embodiment, the tread rubber 8 constitutes a portion ranging from an outer surface of the belt layer 7 to the tread surface 2A. The tread rubber 8 is composed of a center part 8A with a tire equator C centered thereon, and a pair of shoulder parts 8B adjacent to the center part 8A and extending to the tread grounding ends 2e. That is, two types of members of the center part 8A and the shoulder parts 8B are arranged side by side from the vicinity of the tire equator C toward the both sides in the tire axial direction.

In FIG. 1, the interface between the center part 8A and a shoulder part 8B matches a junction line L1. Besides, this interface does not necessarily have to be a straight one. Even if the interface is not a straight one, the junction line L1 is defined as a line segment joining an end point P1 on the outside of the interface in a tire radial direction and an end point P2 on the inside of the interface in the tire radial direction. Among angles formed between the junction line and a tangent line L2 drawn at an intersection P1 of the junction line and a grounding surface, a shoulder part 8B-side angle is $\alpha$, which becomes an obtuse angle (> 90°). Here, $\alpha$ is preferably greater than 90°, more preferably 100° or more, further preferably greater than 110°, further preferably 120° or more. On the other hand, an upper limit of $\alpha$ is not particularly limited from the viewpoint of the effects of the present invention and is usually about 150°. A thickness of an interface part means a thickness of the tread part in a direction perpendicular to the tread surface from a midpoint of the junction line and is denoted by D in FIG. 1. D is preferably greater than 4.0 mm, more preferably 5.0 mm or more, further preferably greater than 6.0 mm. On the other hand, D is preferably less than 10.0 mm, more preferably 9.0 mm or less, further preferably less than 8.0 mm.

As shown in FIG. 2, the interface between the center part 8A and each shoulder part 8B may be inside a width X of the grounding surface (a portion where the tread rubber 8 comes into contact with a road surface 100 in a state where a tire is filled with air at a standardized internal pressure and a standardized load is applied on the tire) or may be outside the width X (see FIG. 3). The state shown in FIG. 2 is referred to as a state "within a grounding surface", and the state shown in FIG. 3 is referred to as a state "outside a grounding surface". A dividing position is preferably outside the width X from the viewpoint of prevention of stepped abrasion caused by a difference in abrasion resistance of compounding of the tread.

(Conductive rubber)

In the present invention, since the rubber composition constituting the center part of the tread comprises a filler (C) including greater than 50% by mass of silica, it cannot be said that electrical conductivity of the tire is good. Accordingly, a conductive rubber layer (so-called a base pen) may be arranged in the center part of the tread. The conductive rubber layer is not particularly limited as long as it can effectively discharge, to the grounding surface, static electricity generated during running of the tire. In FIG. 1, a conductive rubber layer 9 is arranged in the center part 8A. One end of the conductive rubber layer 9 is exposed to the grounding surface, while the other end of the conductive rubber layer 9 passes through the tread part and is coupled to a conductive rubber (not shown in the drawings). As a result, static electricity generated during running of the tire can be effectively discharged to the grounding surface.

[Physical properties of the rubber compositions (tread rubbers) constituting the tread part]

In the present invention, the tread part has a predetermined rubber composition (center rubber) constituting the center part and a predetermined rubber composition (shoulder rubber) constituting the shoulder parts, and each rubber composition has predetermined physical properties.

(Regarding the inequality (1))

In the present invention, a ratio (70°C tan $\delta$(s)/70°C tan 5(c)) of a loss tangent 70°C tan 5(s) at 70°C of the rubber composition constituting the shoulder parts to a loss tangent 70°C tan $\delta$(c) at 70°C of the rubber composition constituting the center part is greater than 1.30. This ratio is preferably greater than 1.35, more preferably 1.40 or more, further preferably greater than 1.45, further preferably 1.50 or more. On the other hand, an upper limit of the ratio is not particularly specified, and is usually less than 2.00, less than 1.95, or less than 1.90.

70°C tan $\delta$ can be adjusted by types or amounts of components compounded in each rubber composition, tends to increase, for example, by increasing an amount of a filler (carbon black, silica, or the like) and the like, and tends to decrease by decreasing the amount of the filler (carbon black, silica, or the like) and the like. 70°C tan $\delta$ is measured by the above-described method.

(Regarding the inequality (2))

In the present invention, a ratio (0°CE*(s)/0°CE*(c)) of a complex elastic modulus 0°CE*(s) at 0°C of the rubber composition constituting the shoulder parts to a complex elastic modulus 0°CE*(c) at 0°C of the rubber composition constituting the center part is less than 1.50. This ratio is preferably less than 1.40, more preferably less than 1.30, further preferably less than 1.20, further preferably less than 1.10, further preferably less than 1.00, further preferably less than 0.95, further preferably less than 0.90, further preferably 0.89 or less. On the other hand, a lower limit of the ratio is not particularly specified, and its usually greater than 0.70 or greater than 0.80.

0°CE* can be adjusted by types or amounts of components compounded in each rubber composition, tends to increase, for example, by increasing an amount of a filler (carbon black, silica, or the like) and the like, and tends to decrease by decreasing the amount of the filler (carbon black, silica, or the like) and the like. 0°CE* is measured by the above-described method.

(Regarding the inequality (3))

In the present invention, a ratio (70°C tan $\delta$(s)/70°C tan $\delta$(c)/D) of the above-described 70°C tan $\delta$(s)/70°C tan $\delta$(c) to a thickness (mm) D of the interface part between the center part and each shoulder part on the tire meridian cross section is preferably 0.18 or more. This ratio is preferably 0.19 or more, more preferably 0.20 or more, further preferably 0.21 or more, further preferably 0.22 or more. On the other hand, an upper limit of the ratio is not particularly specified, and is usually 3.50 or less, 3.00 or less, or 2.80 or less.

The above-described ratio can be adjusted by adjusting a value of 70°C tan $\delta$ or adjusting the thickness D of the interface.

(Regarding the inequality (4))

In the present invention, a difference (T(c) - T(s)) obtained by subtracting the tan $\delta$ peak temperature T(s) (°C) of the rubber composition constituting the shoulder parts from the tan $\delta$ peak temperature T(c) (°C) of the rubber composition constituting the center part is a value greater than 0. This difference is preferably greater than 5.0°C, more preferably greater than 10.0°C, further preferably greater than 15.0°C, further preferably greater than 20.0°C. On the other hand, an upper limit of the difference is not particularly specified, and is usually about 50°C, preferably 40°C or less, more preferably 37°C or less, further preferably 35°C or less.

The tan $\delta$ peak temperature (°C) of each rubber composition can be adjusted by types or amounts of components compounded in each rubber composition, tends to increase, for example, by increasing an amount of a filler or decreasing an amount of a softening agent, and tends to decrease by decreasing the amount of the filler or increasing the amount of the softening agent. The tan $\delta$ peak temperature (°C) is measured by the above-described method.

(Regarding the inequality (5))

In the present invention, a ratio (H(s)/H(c)) of hardness H(s) of the rubber composition constituting the shoulder parts to hardness H(c) of the rubber composition constituting the center part is less than 1.00. This ratio is preferably less than 0.97, more preferably less than 0.95, further preferably less than 0.93. On the other hand, a lower limit of the ratio is not particularly specified, and is usually about 0.75 or about 0.80.

The hardness of each rubber composition can be adjusted by types or amounts of components compounded in each rubber composition, tends to decrease, for example, by increasing an amount of a softening agent, tends to increase by decreasing the amount of the softening agent, tends to increase by increasing an amount of a filler, tends to decrease by decreasing the amount of the filler, tends to decrease by decreasing an amount of sulfur or a vulcanization accelerator, and tends to increase by increasing the amount of sulfur or the vulcanization accelerator. The hardness is measured by the above-described method.

(Regarding the inequality (6))

In the present invention, a ratio (M300(s)/M300(c)) of stress M300(s) (MPa) at 300% elongation of the rubber composition constituting the shoulder parts to stress M300(c) (MPa) at 300% elongation of the rubber composition constituting the center part is less than 1.00. This ratio is preferably less than 0.80, more preferably less than 0.70, further preferably less than 0.60. On the other hand, a lower limit of the ratio is not particularly specified, and is usually about 0.30 or about 0.40.

The M300 of each rubber composition can be adjusted by types or amounts of components compounded in each rubber composition, tends to increase by increasing an amount of a filler or decreasing an amount of a softening agent, and tends to decrease by decreasing the amount of the filler or increasing the amount of the softening agent. The M300 is measured by the above-described method.

<Rubber composition>

A rubber composition constituting a tread rubber according to the present invention will be described below. Here, the rubber composition constituting the tread rubber means both the rubber composition constituting the center part of the tread part and the rubber composition constituting the shoulder parts of the tread part. Both the rubber composition constituting the center part of the tread part and the rubber composition constituting the shoulder parts of the tread part can be produced by appropriately determining types and compounding amounts of components in accordance with respective physical properties based on explanations described below.

[Rubber component]

In the present invention, a rubber component preferably comprises a diene-based rubber. In one preferred embodiment of the present invention, a main component of the rubber component is preferably a diene-based rubber, and for example, a content of the diene-based rubber in the rubber component is more preferably greater than 90% by mass, further preferably 100% by mass.

(Diene-based rubber)

Examples of the diene-based rubber include, for example, a styrene-butadiene rubber (SBR), a butadiene rubber (BR), and the like. The diene-based rubber preferably comprises the SBR and the BR and may be one consisting of the SBR and the BR. Besides, in a case where the diene-based rubber consists of the SBR and the BR, when a content (% by mass) of one of the SBR and the BR is determined based on the explanations described below, a content (% by mass) of the other of the SBR and the BR is accordingly determined. Moreover, as these rubber components, a plasticizing agent-extended rubber previously extended with a plasticizing agent component such as oil, resin, and a liquid polymer may be used.

<<SBR>>

The SBR is not particularly limited, and those common in the tire industry can be used, for example, such as an emulsion-polymerized SBR (E-SBR) and a solution-polymerized SBR (S-SBR). These SBRs may be used alone, or two or more thereof may be used in combination. The E-SBR and the S-SBR can be appropriately used in combination.

Moreover, as the SBR, an unmodified SBR can be used or a modified SBR can be used. As the modified SBR, any of those common in the tire industry can be used, examples of which include one into which a functional group interacting with a filler such as silica is introduced. Examples of such a SBR include, for example, a terminal-modified SBR obtained by modifying at least one terminal of a SBR with a compound (a modifying agent) having a functional group described below, a main chain modified SBR whose main chain has a functional group described below, a main chain terminal-modified SBR having functional groups described below at the main chain and the terminal (for example, a main chain terminal-modified SBR whose main chain has a functional group described below and at least one terminal of which is modified with a compound (a modifying agent) having a functional group described below), a terminal-modified SBR which is modified (coupled) with a polyfunctional compound having two or more epoxy groups in a molecule and into which a hydroxyl group or an epoxy group is introduced, and the like.

Examples of the above-described functional group include, for example, an amino group (preferably an amino group whose hydrogen atom is substituted with an alkyl group having 1 to 6 carbon atoms), an amido group, a silyl group, an alkoxysilyl group (preferably an alkoxysilyl group having 1 to 6 carbon atoms), an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably an alkoxy group having 1 to 6 carbon atoms), a hydroxyl group, an oxy group, an epoxy group, and the like. Besides, these functional groups may have a substituent. Examples of the substituent can include one into which a functional group such as, for example, an amino group, an amido group, an alkoxysilyl group, a carboxyl group, and a hydroxyl group is introduced.

Furthermore, examples of the modified SBR can include one obtained by further hydrogenating the above-described unmodified or modified SBR, one obtained by further epoxidizing the same, one obtained by further tin-modifying the same, and the like. Among them, a SBR obtained by further hydrogenating the above-described modified SBR (a modified hydrogenated SBR) is preferable. The hydrogenated SBR is one improved in motility of a molecular chain by decreasing double bonds and increasing single bonds and is preferable from the viewpoint of the effects of the present invention because it tends to improve an entanglement effect between polymers and enhance a reinforcing property.

As a SBR, a plasticizing agent-extended SBR (for example, an oil-extended SBR) can be used or a non-extended SBR can be used. When the oil-extended SBR is used, an oil-extending amount of the SBR, that is, a content of the extending oil contained in the SBR is preferably 10 parts by mass or more and 50 parts by mass or less based on 100 parts by mass of a rubber solid content of the SBR.

As the SBR, SBRs manufactured and sold by, for example, Sumitomo Chemical Co., Ltd., JSR Corporation, Asahi Kasei Corporation, Zeon Corporation, etc. can be used.

A styrene content of the SBR is preferably greater than 10% by mass, more preferably greater than 20% by mass, more preferably 24% by mass or more, further preferably greater than 30% by mass, for the reason that the effects of the present invention are obtained more appropriately. Moreover, the styrene content is preferably less than 60% by mass, more preferably less than 50% by mass, further preferably 40% by mass or less. Besides, the styrene content is calculated by the above-described measuring method.

A vinyl bond amount of the SBR is preferably greater than 10 mol%, more preferably greater than 15 mol%, further preferably 17 mol% or more, for the reason that the effects of the present invention are obtained more appropriately. Moreover, the vinyl bond amount is preferably less than 80 mol%, more preferably less than 60 mol%, further preferably less than 50 mol%, further preferably 46 mol% or less. Besides, the vinyl bond amount (1,2-bond butadiene unit amount) is measured by the above-described method.

A glass transition temperature (Tg) of the SBR is preferably greater than -90°C, more preferably greater than -70°C, further preferably greater than -60°C, further preferably greater than -53°C or more, for the reason that the effects of the present invention are obtained more appropriately. Moreover, the Tg is preferably less than 0°C, more preferably less than -10°C, further preferably less than -15°C, further preferably less than -20°C, further preferably -25°C or less. Besides, the glass transition temperature is measured by the above-described method.

A weight-average molecular weight (Mw) of the SBR is preferably greater than 200,000, more preferably greater than 300,000, for the reason that the effects of the present invention are obtained more appropriately. Moreover, the Mw is preferably less than 2,000,000, more preferably less than 1,500,000, further preferably less than 1,000,000. Besides, the weight-average molecular weight (Mw) can be calculated by the above-described method.

A content of the SBR in 100% by mass of the rubber component is preferably greater than 50% by mass, more preferably 60% by mass or more, further preferably greater than 70% by mass, further preferably 80% by mass or more, further preferably greater than 90% by mass, and may be 100% by mass. The content of SBR is, in a case of a plasticizing agent-extended SBR, a content of the SBR itself excluding an extending plasticizing agent.

<<BR>>

The BR is not particularly limited, and those common in the tire industry can be used, such as, for example, a BR having a cis-1, 4- bond content (a cis content) greater than 90 mol% (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination. Among them, the high cis BR is preferable.

Examples of the high cis BR include, for example, those manufactured by Zeon Corporation, Ube Industries, Ltd., JSR Corporation, and the like. A cis content of the high cis BR is preferably greater than 95 mol%, more preferably greater than 96 mol%, further preferably 97 mol% or more, further preferably greater than 98 mol%. As a rare-earth-based BR, those which are synthesized using a rare-earth element-based catalyst, and have a vinyl bond amount (1,2-bond butadiene unit amount) of preferably less than 1.8 mol%, more preferably 1.0 mol% or less, further preferably less than 0.8 mol%, and a cis content (cis-1,4 bond content) of preferably less than 95 mol%, more preferably greater than 96 mol%, more preferably 97 mol% or more, can be used. Besides, the cis-1,4-bond content and the vinyl bond amount are measured by the above-described methods.

Examples of the SPB-containing BR include those in which 1,2-syndiotactic polybutadiene crystal is chemically bonded with BR and dispersed, but not those in which the crystal is simply dispersed in the BR. As such a SPB-containing BR, those manufactured by Ube Industries, Ltd., etc. can be used.

Examples of the modified BR include a BR modified in the same manner as described above for the SBR. Moreover, examples of the modified BR include those obtained by adding a tin compound after polymerizing 1,3-butadiene by a lithium initiator (tin-modified BRs), a butadiene rubber having a condensed alkoxysilane compound at an active terminal of the butadiene rubber (modified BR for silica), and the like. As such a modified BR, for example, those manufactured by ZS Elastomer Co., Ltd., and the like. can be used.

A glass transition temperature (Tg) of the BR is preferably greater than -130°C, more preferably greater than -120°C, further preferably greater than -110°C, for the reason that the effects of the present invention are obtained more appropriately. Moreover, the Tg is preferably less than 0°C, more preferably less than -10°C, further preferably less than -60°C, further preferably less than -70°C, further preferably less than -80°C. Besides, in the present specification, the glass transition temperature is measured by the above-described method.

A weight-average molecular weight (Mw) of the BR is preferably greater than 200,000, more preferably greater than 300,000, for the reason that the effects of the present invention are obtained more appropriately. Moreover, the Mw is preferably less than 2,000,000, more preferably less than 1,500,000, more preferably less than 1,000,000. Besides, in the present specification, the weight-average molecular weight (Mw) can be calculated by the above-described method.

A content of the BR in 100% by mass of the rubber component is preferably less than 50% by mass, more preferably 40% by mass or less, further preferably less than 30% by mass. A lower limit of the content of the BR is not particularly limited and may be 0% by mass, or may be, for example, 5% by mass, 10% by mass, or 20% by mass.

<<Other diene-based rubbers>>

The rubber component may comprise other diene-based rubber components other than the above-described SBR and BR. As other diene-based rubber components, cross-linkable rubber components commonly used in the tire industry can be used, examples of which include, for example, a natural rubber (NR), an isoprene rubber (IR), a styrene-isoprene-butadiene copolymer rubber (SIBR), a chloroprene rubber (CR), an acrylonitrile-butadiene rubber (NBR), a polynorbornene rubber, and the like. These other rubber components may be used alone, or two or more thereof may be used in combination.

(Rubber components other than diene-based rubber)

The rubber component can comprise non-diene-based rubbers. Examples of the non-diene-based rubber include a butyl rubber (IIR), a hydrogenated nitrile rubber (HNBR), an ethylene propylene rubber, a silicone rubber, a polyethylene chloride rubber, a fluororubber (FKM), an acrylic rubber (ACM), a hydrin rubber, and the like. These non-diene-based rubbers may be used alone, or two or more thereof may be used in combination.

[Filler]

As the filler, those commonly used in the tire industry can be used, examples of which include not only silica and carbon black but also aluminum hydroxide, alumina (aluminum oxide), clay, calcium carbonate, mica, biochar, and the like. The fillers may be used alone, or two or more thereof may be used.

In the present invention, the rubber composition constituting the center part comprises a filler (C) including greater than 50% by mass of silica, and the rubber composition constituting the shoulder parts comprises a filler (S) including greater than 50% by mass of carbon black. The filler (C) of the rubber composition constituting the center part may include silica and carbon black or may consist of silica and carbon black. The filler (S) of the rubber composition constituting the shoulder parts may include silica and carbon black or may consist of silica and carbon black. In the rubber composition constituting the center part, a content of silica in the filler (C) is preferably greater than 60% by mass, more preferably greater than 70% by mass, further preferably 80% by mass or more. In the rubber composition constituting the shoulder parts, a content of carbon black in the filler (S) is preferably greater than 60% by mass, more preferably greater than 70% by mass, further preferably 80% by mass or more.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. Moreover, as silica other than these silica, silica made from a biomass material such as rice husk can also be used. The silica may be used alone, or two or more thereof may be used in combination.

A nitrogen adsorption specific surface area ($N_2SA$) of silica is preferably greater than 140 $m^2/g$, more preferably greater than 160 $m^2/g$, further preferably greater than 170 $m^2/g$, further preferably 175 $m^2/g$ or more, from the viewpoints of fuel efficiency and abrasion resistance. Moreover, it is preferably less than 350 $m^2/g$, more preferably less than 300 $m^2/g$, further preferably less than 250 $m^2/g$, from the viewpoints of fuel efficiency and processability. Besides, the $N_2SA$ of silica is measured by the above-described method.

A content of silica based on 100 parts by mass of the rubber component is preferably greater than 10 part by mass, more preferably greater than 15 parts by mass, further preferably greater than 20 parts by mass or more, from the viewpoint of the effects of the present invention. Moreover, it is preferably less than 150 parts by mass, more preferably less than 130 parts by mass, further preferably less than 110 parts by mass, further preferably less than 90 parts by mass, from the viewpoint of abrasion resistance.

Particularly, in the rubber composition constituting the center part of the tread part, a content of silica based on 100 parts by mass of the rubber component is preferably greater than 50 parts by mass, more preferably greater than 60 parts by mass, further preferably greater than 70 parts by mass, and it is preferably less than 150 parts by mass, more preferably less than 130 parts by mass, further preferably less than 110 parts by mass, further preferably less than 90 parts by mass.

(Carbon black)

As carbon black, those common in the tire industry can be appropriately used, examples of which can include, for example, GPF, FEF, HAF, ISAF, SAF, and the like. Alternatively, examples of carbon black include N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like. As commercially available carbon black, products manufactured by ASAHI CARBON CO., LTD., Cabot Japan K.K., TOKAI CARBON CO., LTD., Mitsubishi Chemical Corporation., Lion Corporation., NIPPON STEEL Carbon Co., Ltd., Columbia Carbon Corporation., etc. can be used. These carbon black may be used alone, or two or more thereof may be used in combination.

Moreover, as carbon black, recovered carbon black can also be used. The term "recovered carbon black" refers to carbon black that is obtained by pulverizing a product comprising carbon black such as a used tire and calcinating the pulverized product. The recovered carbon black has a ratio of a mass (ash amount) of ash, which is a component that does not combust, the ratio being 13% by mass or more when the carbon black is subjected to oxidative combustion by heating in the air, using a thermal weight measurement method according to JIS K 6226-2:2003. That is, the recovered carbon black has a ratio of a mass (carbon amount) of weight loss due to the oxidative combustion, the ratio being less than 87% by mass. The recovered carbon black may be expressed by rCB.

A nitrogen adsorption specific surface area ($N_2SA$) of carbon black is preferably greater than 40 $m^2/g$, more preferably greater than 80 $m^2/g$, further preferably greater than 100 $m^2/g$, further preferably greater than 120 $m^2/g$, from the viewpoints of abrasion resistance, grip performance, etc. Moreover, the $N_2SA$ is preferably less than 300 $m^2/g$, more preferably less than 250 $m^2/g$, further preferably less than 200 $m^2/g$, further preferably less than 160 $m^2/g$, from the viewpoint of good dispersion. Besides, the $N_2SA$ of carbon black is measured by the above-described method.

A dibutyl phthalate (DBP) oil absorption amount of carbon black is preferably greater than 50 mL/100 g, more preferably greater than 100 mL/100 g, from the viewpoint of sufficient reinforcing property. Moreover, the DBP oil absorption amount of carbon black is preferably less than 200 mL/100 g, more preferably less than 150 mL/100 g or less, from the viewpoint of wet grip performance. Besides, the DBP oil absorption amount of carbon black is measured by the above-described method.

A content of carbon black based on 100 parts by mass of the rubber component is preferably greater than 1 part by mass, more preferably greater than 5 parts by mass, further preferably greater than 10 parts by mass, further preferably greater than 15 parts by mass, further preferably greater than 20 parts by mass, from the viewpoints of good ultraviolet crack resistance and good abrasion resistance. Moreover, this content is preferably less than 200 parts by mass, more preferably less than 150 parts by mass, further preferably less than 120 parts by mass, further preferably less than 110 parts by mass, further preferably less than 100 parts by mass, from the viewpoints of processability and heat generation.

Particularly, in the rubber composition constituting the shoulder parts of the tread part, a content of carbon black based on 100 parts by mass of the rubber component is preferably greater than 50 parts by mass, more preferably 60 parts by mass or more, further preferably greater than 70 parts by mass, and it is preferably less than 200 parts by mass, more preferably less than 150 parts by mass, further preferably less than 120 parts by mass, further preferably less than 110 parts by mass, further preferably less than 100 parts by mass.

A total content of the fillers based on 100 parts by mass of the rubber component is preferably greater than 50 parts by mass, more preferably greater than 70 parts by mass or more, from the viewpoint of sufficient reinforcing property. On the other hand, this content is preferably less than 250 parts by mass, more preferably less than 180 parts by mass, further preferably less than 150 parts by mass, from the viewpoint of wet grip performance.

(Silane coupling agent)

A silane coupling agent is preferably used for the rubber compositions. The silane coupling agent is not particularly limited, and any silane coupling agents conventionally used in the tire industry can be used. Specific examples of the silane coupling agent include, for example, a silane coupling agent having a sulfide group, such as bis(3-triethoxysilylpropyl)disulfide and bis(3-triethoxysilylpropyl)tetrasulfide; a silane coupling agent having a mercapto group, such as 3-mercaptopropyltrimethoxysilane, 3-mercaptopropyltriethoxysilane, 2-mercaptoethyltrimethoxysilane, 2-mercaptoethyltriethoxysilane, a mercapto-based silane coupling agent manufactured by Momentive Performance Materials; a silane coupling agent having a thioester group, such as 3-octanoylthio-1-propyltriethoxysilane, 3-hexanoylthio-1-propyltriethoxysilane, and 3-octanoylthio-1-propyltrimethoxysilane; a silane coupling agent having a vinyl group, such as vinyltriethoxysilane and vinyltrimethoxysilane; a silane coupling agent having an amino group, such as 3-aminopropyltriethoxysilane, 3-aminopropyltrimethoxysilane, and 3-(2-aminoethyl)aminopropyltriethoxysilane; a glycidoxy-based silane coupling agent such as $\gamma$-glycidoxypropyltriethoxysilane and $\gamma$-glycidoxypropyltrimethoxysilane; a nitro-based silane coupling agent such as 3-nitropropyltrimethoxysilane and 3-nitropropyltriethoxysilane; a chloro-based silane coupling agent such as 3-chloropropyltrimethoxysilane and 3-chloropropyltriethoxysilane; and the like. Among them, the silane coupling agent having a sulfide group, the silane coupling agent having a mercapto group, and the silane coupling agent having a thioester group are preferable, and the silane coupling agent having a sulfide group is more preferable. These silane coupling agents may be used alone, or two or more thereof may be used in combination.

A content of the silane coupling agent based on 100 parts by mass of silica is preferably greater than 1 part by mass, more preferably greater than 2 parts by mass, further preferably greater than 5 parts by mass, from the viewpoint of sufficient chipping resistance. Moreover, the content of the silane coupling agent based on 100 parts by mass of silica is preferably less than 20 parts by mass, more preferably less than 15 parts by mass, further preferably less than 12 parts by mass, from the viewpoint of a compounding effect commensurate with the content.

[Plasticizing agent]

The rubber component can comprise a plasticizing agent. Examples of the plasticizing agent include, for example, oil, resin, a liquid polymer, and the like. The plasticizing agent may be used alone, or two or more thereof may be used.

(Oil)

Oil is not particularly limited, and for example, process oils, vegetable oils and fats, mixtures thereof, etc. can be used. Examples of the process oils can include a paraffinic process oil, a naphthenic process oil, an aromatic process oil, and the like. Moreover, examples of the vegetable oils and fats can include a castor oil, a cottonseed oil, a linseed oil, a rapeseed oil, a soybean oil, a palm oil, a coconut oil, a peanut oil, a rosin, a pine oil, a pine tar, a tall oil, a corn oil, a rice bran oil, a safflower oil, a sesame oil, an olive oil, a sunflower oil, a palm kernel oil, a camellia oil, a jojoba oil, a macadamia nut oil, a tung oil, and the like. Among them, the aromatic process oil is preferable. Moreover, from the viewpoint of life cycle assessment, a refined oil of waste oil from rubber mixers or engines, or waste oil from cooking in restaurants may be used. The oil may be used alone, or two or more thereof may be used in combination.

A content of oil based on 100 parts by mass of the rubber component is preferably 10 parts by mass or more, more preferably greater than 15 parts by mass, further preferably greater than 20 parts by mass, from the viewpoint of the effects of the present invention. This content is preferably less than 80 parts by mass, more preferably less than 70 parts by mass, further preferably less than 60 parts by mass, more preferably less than 50 parts by mass, from the viewpoint of steering stability. Besides, in the present specification, the content of oil also comprises an amount of oil contained in an oil-extended rubber.

(Resin)

As resin, those conventionally used in the tire industry can be used. Examples of such resin include, for example, an aromatic resin, an aliphatic petroleum resin, a terpene-based resin, a rosin-based resin, and the like, and these resins may be used alone, or two or more thereof may be used in combination. Among them, from the viewpoint of the effects of the present invention, the aromatic resin is preferable.

<<Aromatic resin>>

Examples of the aromatic resin include not only an aromatic petroleum resin, a terpene phenol resin, a terpene styrene resin, and a coumarone-based resin but also a phenol formaldehyde resin, an alkylphenol formaldehyde resin, an alkyl phenol acetylene resin, an oil-modified phenol formaldehyde resin, and the like. The aromatic resin may be used alone, or two or more thereof may be used in combination.

As the aromatic petroleum resin, a resin obtained by performing cationic polymerization of monomers, such as vinyltoluene, alkylstyrene, and indene, that are petroleum fractions (C9 fractions) having 8 to 10 carbon atoms (which is also referred to as a C9-based petroleum resin), and a resin obtained by copolymerizing unsaturated monomers, such as isoprene and cyclopentadiene, that are petroleum fractions (C5 fractions) having 4 to 5 carbon atoms, and C9 fractions (which is also referred to as a C5-C9-based petroleum resin) are used. Moreover, a resin obtained by hydrogenating one of these resins may be used. More specifically, examples of such a resin include, for example, a $\alpha$-methylstyrene-based resin. Examples of the $\alpha$-methylstyrene-based resin include a homopolymer of $\alpha$-methylstyrene (poly-$\alpha$-methylstyrene) and a copolymer of $\alpha$-methylstyrene and another compound including an aromatic compound or a phenolic compound. Examples of such another compound that may constitute this copolymer include styrene, methylstyrene, methoxystyrene, divinylbenzene, and the like. Particularly, a copolymer of $\alpha$-methylstyrene and styrene is preferable. As the $\alpha$-methyl-styrene-based resin, those manufactured by Kraton Corporation, and the like are appropriately used.

The terpene phenol resin is a resin made from a terpene compound and a phenolic compound. Here, the terpene compound refers to $\alpha$-pinene, $\beta$-pinene, limonene, dipentene, and the like. The terpene styrene resin is a resin made from a terpene compound and styrene. The terpene phenol resin and the terpene styrene resin may be resins undergoing a hydrogeneration treatment (a hydrogenated terpene phenol resin, a hydrogenated terpene styrene resin). The hydrogeneration treatment can be performed in a known manner or a commercially available hydrogenated resin can also be used.

The coumarone-based resin is a resin comprising coumarone as a main component, examples of which include, for example, a coumarone resin, a coumarone-indene resin, a copolymer resin comprising coumarone, indene, and styrene as main components, and the like. The coumarone-based resin may be used alone, or two or more thereof may be used in combination.

<<Aliphatic petroleum resin>>

The aliphatic petroleum resin is not particularly limited, and a resin obtained by performing cationic polymerization of unsaturated monomers, such as isoprene and cyclopentadiene, that are petroleum fractions (C5 fractions) having 4 to 5 carbon atoms (which is also referred to as C5-based petroleum resin) can be used. The aliphatic petroleum resin may be used alone, or two or more thereof may be used in combination.

<<Polyterpene-based resin>>

Examples of the polyterpene-based resin include a resin made from at least one selected from terpene compounds such as $\alpha$-pinene, $\beta$-pinene, limonene, and dipentene. The polyterpene-based resin may be used alone, or two or more thereof may be used in combination.

<<Rosin-based resin>>

Examples of the rosin-based resin include, but not particularly limited to, for example, a natural resin rosin, and a rosin-modified resin obtained by modifying it by hydrogenation, disproportionation, dimerization, esterification, or the like.

The rosin-based resin may be used alone, or two or more thereof may be used in combination.

<<Resin content>>

A content of resin based on 100 parts by mass of the rubber component is preferably greater than 1 part by mass, more preferably greater than 2 parts by mass, further preferably greater than 3 parts by mass, particularly preferably greater than 5 parts by mass, from the viewpoints of adhesiveness and grip performance. Moreover, it is preferably less than 50 parts by mass, more preferably less than 40 parts by mass, further preferably 35 parts by mass or less, further preferably 30 parts by mass or less, from the viewpoints of abrasion resistance and grip performance. Besides, in the present specification, the content of resin also includes an amount of resin contained in a rubber extended by this resin.

<<Softening point of resin>>

A softening point of the resin is preferably lower than 160°C, more preferably lower than 145°C, further preferably lower than 130°C, from the viewpoint of grip performance. Moreover, the softening point is preferably higher than 20°C, more preferably higher than 35°C, further preferably higher than 50°C, further preferably higher than 80°C, from the viewpoint of grip performance. Besides, the softening point is measured by the above-described method.

<<Weight-average molecular weight of resin>>

A weight-average molecular weight (Mw) of the resin is preferably greater than 300, more preferably greater than 400, further preferably greater than 500, from the viewpoints of less volatilization and a good grip performance. Moreover, the Mw is preferably less than 15,000, more preferably less than 10,000, further preferably less than 8,000. Besides, the weight-average molecular weight (Mw) can be calculated by the above-described method.

<<SP value of resin>>

A SP value of the resin is preferably 8.0 or more, more preferably greater than 8.0, further preferably greater than 8.3, and it is preferably 11.0 or less, more preferably within a range of less than 11.0, more preferably less than 9.5, from the viewpoint that compatibility with the rubber component (particularly, SBR) is excellent. When a resin having a SP value within the above-described ranges is used, compatibility with the SBR and the BR is improved, and there is a tendency that abrasion resistance and elongation at break can be improved. Besides, the SP value is calculated by the above-described method.

(Liquid polymer)

The liquid polymer is not particularly limited as long as it is a polymer in a liquid state at room temperature (25°C), examples of which include, for example, a liquid styrene-butadiene copolymer (liquid SBR), a liquid butadiene polymer (liquid BR), a liquid isoprene polymer (liquid IR), a liquid styrene-isoprene copolymer (liquid SIR), and a liquid diene-based copolymer such as myrcene and farnesene. The liquid polymer may be used alone, or two or more thereof may be used in combination. Among them, from the viewpoint of grip performance, the liquid SBR is preferable. Regarding a molecular weight of the liquid polymer, a weight-average molecular weight measured with a gel permeation chromatography (GPC) and calculated in terms of polystyrene is preferably $1.0 \times 10^3$ to $2.0 \times 10^5$. Besides, the weight-average molecular weight (Mw) can be calculated by the above-described method.

A content of the liquid polymer when compounded based on 100 parts by mass of the rubber component is preferably greater than 1 part by mass, more preferably greater than 5 parts by mass, from the viewpoint of grip performance. Moreover, it is preferably less than 40 parts by mass, more preferably less than 30 parts by mass, further preferably less than 20 parts by mass, particularly preferably less than 10 parts by mass, from the viewpoint of abrasion resistance. Besides, in the present specification, the content of the liquid polymer also includes an amount of a liquid polymer contained in a rubber extended by this liquid polymer.

(Content of plasticizing agent)

A content of the plasticizing agent based on 100 parts by mass of the rubber component is preferably greater than 15 parts by mass, more preferably greater than 20 parts by mass, further preferably greater than 25 parts by mass. On the other hand, the content of the plasticizing agent is preferably less than 85 parts by mass, more preferably less than 80 parts by mass, further preferably less than 70 parts by mass, further preferably less than 60 parts by mass. Besides, in the present specification, the content of the plasticizing agent also includes an amount of a plasticizing agent contained in a rubber extended by this plasticizing agent.

[Other compounding agents]

Each of the rubber compositions can comprise compounding agents conventionally and commonly used in the tire industry in addition to the above-described components. Examples of such compounding agents include, for example, wax, processing aid, an antioxidant, stearic acid, zinc oxide, an inorganic potassium salt, a vulcanizing agent such as sulfur, a vulcanization accelerator, and the like. Furthermore, each of the rubber compositions may or may not comprise a thermoplastic elastomer.

(Wax)

As the wax, those conventionally and commonly used in the tire industry can be used, and the wax may be used alone, or two or more thereof may be used in combination. A content of the wax when compounded based on 100 parts by mass of the rubber component is preferably greater than 0.5 parts by mass, more preferably 1 part by mass or more, from the viewpoint of weather resistance of a rubber. Moreover, it is preferably less than 10 parts by mass, more preferably less than 5 parts by mass, from the viewpoint of suppression of whitening of a tire due to bloom.

(Processing aid)

As the processing aid, those conventionally and commonly used in the tire industry can be used, examples of which include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. The processing aid may be used alone, or two or more thereof may be used in combination. A content of the processing aid when compounded based on 100 parts by mass of the rubber component is preferably greater than 0.5 parts by mass, more preferably greater than 1 part by mass, from the viewpoint of exhibiting an effect of improving processability. Moreover, it is preferably less than 10 parts by mass, more preferably less than 8 parts by mass, from the viewpoints of abrasion resistance and breaking strength.

(Antioxidant)

As the antioxidant, those conventionally and commonly used in the tire industry can be used. Specifically, examples of the antioxidant include, for example, each amine-based, quinoline-based, quinone-based, phenol-based, imidazole-based, and phenylenediamine-based compound, and antioxidants such as a carbamic acid metal salt. Among them, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diallyl-p-phenylenediamine, phenylhexyl-p-phenylenediamine, and phenyloctyl-p-phenylenediamine, and quinoline-based antioxidants such as 2,2,4-trimethyl-1,2-dihydroquinoline polymer and 6-ethoxy-2,2,4-trimethyl-1,2-dihydroquinoline are preferable. These antioxidants may be used alone, or two or more thereof may be used in combination.
A content of the antioxidant when compounded based on 100 parts by mass of the rubber component is preferably greater than 0.5 parts by mass or may be 1 part by mass or more, from the viewpoint of ozone crack resistance of a rubber. Moreover, it is preferably less than 10 parts by mass, more preferably less than 5 parts by mass, from the viewpoints of abrasion resistance and wet grip performance.

(Stearic acid)

A content of stearic acid when compounded based on 100 parts by mass of the rubber component is preferably greater than 0.5 parts by mass, more preferably greater than 1 part by mass, from the viewpoint of processability. Moreover, it is preferably less than 10 parts by mass, more preferably less than 5 parts by mass, from the viewpoint of vulcanization rate.

(Zinc oxide)

A content of zinc oxide when compounded based on 100 parts by mass of the rubber component is preferably greater than 0.5 parts by mass, more preferably greater than 1 part by mass, from the viewpoint of processability.

Moreover, it is preferably less than 10 parts by mass, more preferably less than 5 parts by mass, from the viewpoint of abrasion resistance.

(Inorganic potassium salt)

As the inorganic potassium salt, those conventionally and commonly used in the tire industry can be used, and the inorganic potassium salt may be used alone, or two or more thereof may be used in combination. Examples of the inorganic potassium salt include, for example, one or more potassium salts selected from a group consisting of potassium carbonate, potassium bicarbonate, and potassium tetraborate, and the like. Among them, potassium tetraborate is preferable.

A content of the inorganic potassium salt based on 100 parts by mass of silica is preferably greater than 0.3 parts by mass, more preferably greater than 0.4 part by mass, from the viewpoint of extrudability. Moreover, the content based on 100 parts by mass of silica is preferably less than 3 parts by mass, more preferably less than 2.5 parts by mass, more preferably less than 2 parts by mass, further preferably less than 1.45 parts by mass, from the viewpoint of abrasion resistance.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used, and the respective ones may be used alone, or two or more thereof may be used in combination.

Examples of vulcanizing agents other than sulfur include: for example, a vulcanizing agent including a sulfur atom, such as sodium hexamethylene-1,6-bisthiosulfate dihydrate, and 1,6-bis(N,N'-dibenzylthiocarbamoyldithio)hexane; organic peroxide such as dicumyl peroxide; and the like. As the vulcanizing agents other than sulfur, for example, those manufactured by Taoka Chemical Co., Ltd., Flexsys, and LANXESS, etc. can be used.

A content of sulfur when compounded as the vulcanizing agent based on 100 parts by mass of the rubber component is preferably greater than 0.5 parts by mass, more preferably greater than 0.7 part by mass, from the viewpoint of securing a sufficient vulcanization reaction to obtain good grip performance and abrasion resistance. Moreover, it is preferably less than 5.0 parts by mass, more preferably less than 4.0 parts by mass, further preferably less than 3.0 parts by mass, from the viewpoint of suppression of deterioration.

(Vulcanization accelerator)

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, xanthate-based vulcanization accelerators, and the like. These vulcanization accelerators may be used alone, or two or more thereof may be used in combination. Among them, at least one of sulfenamide-based, guanidine-based, and thiazole-based vulcanization accelerators is preferable, and the sulfenamide-based and guanidine-based vulcanization accelerators are more preferably used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-tert-butyl-2-benzothiazolyl sulfenamide (TBBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably greater than 1 part by mass, more preferably greater than 2 parts by mass. Moreover, the content of the vulcanization accelerator based on 100 parts by mass of the rubber component is preferably less than 8 parts by mass, more preferably less than 7 parts by mass, further preferably less than 6 parts by mass. When the content of the vulcanization accelerator is within the above-described ranges, breaking strength and elongation tend to be secured.

<Production method>

[Production of rubber composition]

As a method of producing the rubber compositions of the present invention, a known method can be appropriately applied. For example, it can be produced by kneading the above-described components with a rubber kneading machine such as an open roll and a sealed type kneader (a Banbury mixer, a kneader, and the like). A kneading step includes, for example, a base kneading step of kneading compounding agents and additives other than a vulcanizing agent and a vulcanization accelerator, and a final kneading (F-kneading) step of adding the vulcanizing agent and the vulcanization accelerator to the kneaded product obtained in the base kneading step and kneading them. Additionally, the base kneading step can also be divided into multiple steps as necessary. Examples of a kneading condition include, but not particularly limited to, for example, a method of kneading at a discharge temperature of 150°C or more and 170°C or less for a period of 3 minutes or more and 10 minutes or less in the base kneading step and kneading at a temperature of 50°C or more and 110°C or less for a period of 1 minute or more and 5 minutes or less in the final kneading step.

[Production of tire]

The rubber composition as described above is extruded into a desired shape of a tread at an unvulcanized stage, and is molded together with other tire members by a normal method on a tire molding machine, thereby allowing for production of an unvulcanized tire. A motorcycle tire of the present invention can be obtained by heating and pressurizing (vulcanizing) this unvulcanized tire in a vulcanizing machine. Examples of a vulcanization condition include, but not particularly limited to, for example, a method of vulcanizing at a temperature of 150°C or more and 200°C or less for a period of 5 minutes or more and 30 minutes or less.

[Application]

Although a form of the motorcycle tire of the present invention is not particularly limited and may be any of a pneumatic tire and a solid tire, the tire of the present invention is preferably used as a pneumatic tire. Moreover, the tire of the present invention can also be used for any of various applications, such as an on-road tire, an off-road tire, and a racing tire.

EXAMPLES

Hereinafter, the present invention will be specifically described based on Examples.

<Various chemicals>

SBR1: TUFDENE 4850 (unmodified S-SBR manufactured by Asahi Kasei Corporation, styrene content: 40% by mass, vinyl bond amount: 46%, Tg: -25°C, comprising 50 parts by mass of an extending oil content based on 100 parts by mass of a rubber solid content)
SBR2: JSR1723 (unmodified E-SBR manufactured by JSR Corporation, styrene content: 24% by mass, vinyl bond amount: 17%, Tg: -53°C, comprising 37.5 parts by mass of an extending oil content based on 100 parts by mass of a rubber solid content)
BR: UBEPOL BR150B (unmodified BR manufactured by Ube Industries, Ltd., cis content: 97%, vinyl bond amount: 1%, Tg: -107°C)
Carbon black: SHOW BLACK N110 (available from Cabot Japan K.K., $N_2SA$: 142 $m^2/g$ (BET value), DBP oil absorption amount: 115 mL/100g)
Silica: ULTRASIL VN3 (available from Evonik Degussa GmbH, $N_2SA$: 175 $m^2/g$ (BET value))
Silane coupling agent: Si69 (manufactured by Evonik Degussa GmbH, bis(3-triethoxysilylpropyl)tetrasulfide)
Oil: DIANA PROCESS NH-70S (aromatic process oil manufactured by Idemitsu Kosan Co., Ltd.)
Resin: Sylvatraxx 4401 (aromatic petroleum resin manufactured by Kraton Corporation ($\alpha$-methylstyrene resin: copolymer of $\alpha$-methylstyrene and styrene), softening point: 85°C, SP value: 9.1)
Wax: OZOACE 0355 (available from Nippon Seiro Co., Ltd)
Antioxidant: Antigen 6C (N-(1,3-dimethylbutyl)-N'-phenyl-p-phenylenediamine, available from Sumitomo Chemical Co., Ltd.)
Stearic acid: Stearic acid "CAMELLIA" (available from NOF CORPORATION)
Zinc oxide: Ginrei R (available from TOHO ZINC CO., LTD.)
Sulfur: HK-200-5 (5% oil-containing powdered sulfur manufactured by Hosoi Chemical Industry Co., Ltd.)

Vulcanization accelerator 1: Nocceler NS-P (N-tert-butyl-2-benzothiazolylsulfenamide (TBBS), available from Ouchi Shinko Chemical Industry Co., Ltd.)

Vulcanization accelerator 2: Nocceler D (1,3-diphenylguanidine (DPG), available from Ouchi Shinko Chemical Industry Co., Ltd.)

<Test tire>

According to the compounding formulations (C1, C2) for a rubber composition for center part shown in Table 1, using a 1.7 L Banbury mixer manufactured by Kobe Steel, Ltd., chemicals other than sulfur and a vulcanization accelerator are kneaded at a discharge temperature of 150°C for 5 minutes. Next, sulfur and the vulcanization accelerator are added to the obtained kneaded product, and the mixture is kneaded with an open roll for 4 minutes until the temperature reaches 105°C, to obtain an unvulcanized rubber composition for center part.

Moreover, according to the compounding formulations (S1 to S8) for a rubber composition for shoulder parts shown in Table 1, the same process as in the case of the center part is performed to obtain an unvulcanized rubber composition for shoulder parts.

Based on the specifications shown in Table 2, test tires are produced. That is, the above-described rubber composition for center part and rubber composition for shoulder parts are molded into shapes of a center part and a pair of shoulder parts of a tread, respectively, and attached together with other tire members to produce an unvulcanized tire, and the unvulcanized tire is press-vulcanized at 170°C for 12 minutes, thereby obtaining each test tire. A size of each test tire is 120/70ZR17 for a front tire or 180/55ZR17 for a rear tire.

<Measurement and evaluation>

Results of calculation based on a measurement method and an evaluation method described below are shown in Tables 1 and 2.

[70°C tan $\delta$]

A loss tangent at 70°C of a vulcanized rubber composition, 70°C tan $\delta$, is measured using EPLEXOR Series manufactured by gabo Systemtechnik GmbH under a condition of a temperature at 70°C, a frequency of 10 Hz, an initial strain of 10%, a dynamic strain of 1%, and an extension mode. A vulcanized rubber composition of 20 mm in length, 4 mm in width, and 1 mm in thickness that is cut out from a tread part of a test tire so that a tire circumferential direction becomes a length direction is used as a sample for measurement.

[0°CE$^*$]

A complex elastic modulus at 0°C of the vulcanized rubber composition, 0°CE* (MPa), is measured using EPLEXOR Series manufactured by gabo Systemtechnik GmbH under a condition of a temperature at 0°C, a frequency of 10 Hz, an initial strain of 5%, a dynamic strain of 1%, and an extension mode. A sample for measurement is prepared in the same manner as that for the above-described sample for measurement of tan $\delta$.

[Tan $\delta$ peak temperature]

A tan $\delta$ peak temperature (°C) of the vulcanized rubber composition is determined as a temperature corresponding to a largest tan $\delta$ value (tan $\delta$ peak temperature) in a temperature distribution curve of tan $\delta$ measured using EPLEXOR Series manufactured by gabo Systemtechnik GmbH under a condition of a frequency of 10 Hz, an initial strain of 10%, a dynamic strain of $\pm$0.5%, and a temperature rising rate of 2°C/min. A sample for measurement is prepared in the same manner as that for the above-described sample for measurement of tan $\delta$.

[Hardness]

Hardness of the vulcanized rubber composition is measured by preparing a sample for measuring hardness which is cut out from the tread part forming a grounding surface of a test tire so that a tire radial direction became a thickness direction, and pressing a type A durometer against the sample from the grounding surface side at 23°C in accordance with JIS K 6253.

[M300]

For M300, a dumbbell-shaped No. 7 specimen with a thickness of 1 mm, which is cut out from inside of a rubber layer of a tread part of a test tire so that a tire circumferential direction became a tensile direction, is prepared, and according to JIS K 6251 "Rubber, vulcanized or thermoplastics-Determination of tensile stress-strain properties", a tensile test is performed under a condition of a tensile speed of 3.3 mm/sec in an atmosphere of 23°C to measure a stress at 300% elongation (M300) (MPa).

[Interface peeling resistance]

Each test tire is assembled to a standardized rim (front wheel: MT3.50x17, rear wheel: MT5.50x17) and mounted to a test vehicle (a two-wheeled vehicle with a displacement of 750 cc (four-cycle)). An air internal pressure is adjusted to be 250 kPa for a front tire and 290 kPa for a rear tire.

This test vehicle is run for 5000 km on a test course with a dry asphalt road surface, and a condition of peeling on the interface between a center part and each shoulder part of tread is visually evaluated. Interface peeling resistance is indicated as an index with the reference comparative example being as 100. The results show that the larger the numerical value is, the more excellent the evaluation is.

Table 1

|  | Center part | | Shoulder part | | | | | | | |
|---|---|---|---|---|---|---|---|---|---|---|
|  | C1 | C2 | S1 | S2 | S3 | S4 | S5 | S6 | S7 | S8 |
| Compounding amount (part by mass) | | | | | | | | | | |
| SBR 1 | 150 | 150 | 90 | 120 | 90 | - | - | 150 | 150 | 150 |
| SBR 2 | - | - | - | - | 55 | 137.5 | 137.5 | - | - | - |
| BR | - | - | 40 | 20 | - | - | - | - | - | - |
| Carbon black | - | - | 65 | 65 | 65 | 80 | 80 | 60 | 80 | 60 |
| Silica | 80 | 75 | - | - | - | - | - | - | - | - |
| Silane coupling agent | 6.4 | 5.6 | - | - | - | - | - | - | - | - |
| Oil | 30 | 35 | 30 | 30 | 30 | 30 | 30 | 35 | 30 | 10 |
| Resin | 15 | 15 | - | - | - | - | 15 | 10 | 10 | 30 |
| Wax | 1 | 1 | 1 | 1 | 1 | 1 | 1 | 1 | 1 | 1 |
| Antioxidant | 1 | 1 | 1 | 1 | 1 | 1 | 1 | 1 | 1 | 1 |
| Stearic acid | 2 | 2 | 2 | 2 | 2 | 2 | 2 | 2 | 2 | 2 |
| Zinc oxide | 2 | 2 | 2 | 2 | 2 | 2 | 2 | 2 | 2 | 2 |
| Sulfur | 3 | 3.5 | 1.5 | 1.5 | 1.5 | 1.5 | 1.5 | 1.5 | 1.5 | 1.5 |
| Vulcanization accelerator 1 | 1.5 | 1.5 | 1.5 | 1.5 | 1.5 | 1.5 | 1.5 | 1.5 | 1.5 | 1.5 |
| Vulcanization accelerator 2 | 1 | 1 | 1 | 1 | 1 | 1 | 1 | 1 | 1 | 1 |
| Physical properties | | | | | | | | | | |
| 70°C tan δ | 0.15 | 0.14 | 0.21 | 0.22 | 0.23 | 0.24 | 0.26 | 0.18 | 0.25 | 0.19 |
| 0°CE* (MPa) | 24.1 | 19.8 | 20.5 | 21.4 | 21.1 | 21.5 | 20.9 | 21.1 | 40.1 | 38.9 |
| tan δ peak temperature (°C) | -2 | -4 | -26 | -17 | -20 | -40 | -34 | -5 | -6 | 2 |
| Hardness | 47 | 47 | 46 | 44 | 43 | 46 | 44 | 36 | 46 | 41 |
| M300 (MPa) | 5.1 | 5.1 | 3.9 | 3.3 | 2.8 | 3.9 | 2.4 | 1.6 | 3.2 | 2.1 |

Table 2

|  | Example | | | | | | |
|---|---|---|---|---|---|---|---|
|  | 1 | 2 | 3 | 4 | 5 | 6 | 7 |
| Center part (compounding) | C1 | C1 | C1 | C1 | C1 | C1 | C1 |
| Compounding amount of silica (part by mass) | 80 | 80 | 80 | 80 | 80 | 80 | 80 |
| 70°C tan δ(c) | 0.15 | 0.15 | 0.15 | 0.15 | 0.15 | 0.15 | 0.15 |

(continued)

| | Example | | | | | | |
|---|---|---|---|---|---|---|---|
| | 1 | 2 | 3 | 4 | 5 | 6 | 7 |
| 0°CE*(c) | 24.1 | 24.1 | 24.1 | 24.1 | 24.1 | 24.1 | 24.1 |
| T(c) [tan δ peak temperature] (°C) | -2.0 | -2.0 | -2.0 | -2.0 | -2.0 | -2.0 | -2.0 |
| H(c) [Hardness] | 47 | 47 | 47 | 47 | 47 | 47 | 47 |
| M300(c) (MPa) | 5.1 | 5.1 | 5.1 | 5.1 | 5.1 | 5.1 | 5.1 |
| Shoulder part (compounding) | S1 | S1 | S2 | S3 | S4 | S5 | S5 |
| Compounding amount of SBR (part by mass) | 60 | 60 | 80 | 100 | 100 | 100 | 100 |
| Compounding amount of carbon black (part by mass) | 65 | 65 | 65 | 65 | 80 | 80 | 80 |
| Compounding amount of resin (part by mass) | - | - | - | - | - | 15 | 15 |
| 70°C tan δ(s) | 0.21 | 0.21 | 0.22 | 0.23 | 0.24 | 0.26 | 0.26 |
| 0°CE*(s) | 20.5 | 20.5 | 21.4 | 21.1 | 21.5 | 20.9 | 20.9 |
| T(s) [tan δ peak temperature] (°C) | -26.0 | -26.0 | -17.0 | -20.0 | -40.0 | -34.0 | -34.0 |
| H(s) [Hardness] | 46 | 46 | 44 | 43 | 46 | 44 | 44 |
| M300(s) (MPa) | 3.9 | 3.9 | 3.3 | 2.8 | 3.9 | 2.4 | 2.4 |
| D [thickness of interface part] (mm) | 9.0 | 7.5 | 7.5 | 7.5 | 7.5 | 7.5 | 7.5 |
| Degree α (°) | 100 | 100 | 100 | 100 | 100 | 100 | 120 |
| Inequality (1): 70°C tan δ(s)/70°C tan δ(c) | 1.40 | 1.40 | 1.47 | 1.53 | 1.60 | 1.73 | 1.73 |
| Inequality (2): 0°CE*(s)/ 0°CE*(c) | 0.85 | 0.85 | 0.89 | 0.88 | 0.89 | 0.87 | 0.87 |
| Inequality (3): 70°C tan δ(s)/ 70°C tan δ(c)/D | 0.16 | 0.19 | 0.20 | 0.20 | 0.21 | 0.23 | 0.23 |
| Inequality (4): T(c) - T(s) | 24.0 | 24.0 | 15.0 | 18.0 | 38.0 | 32.0 | 32.0 |
| Inequality (5): H(s)/H(c) | 0.98 | 0.98 | 0.94 | 0.91 | 0.98 | 0.94 | 0.94 |
| Inequality (6): M300(s)/M300(c) | 0.76 | 0.76 | 0.65 | 0.55 | 0.76 | 0.47 | 0.47 |
| Interface peeling resistance | 105 | 107 | 109 | 112 | 115 | 126 | 129 |

| | Example | | | | | |
|---|---|---|---|---|---|---|
| | 8 | 9 | 10 | 11 | 12 | 13 |
| Center part (compounding) | C1 | C2 | C2 | C2 | C2 | C2 |
| Compounding amount of silica (part by mass) | 80 | 75 | 75 | 75 | 75 | 75 |
| 70°C tan δ(c) | 0.15 | 0.14 | 0.14 | 0.14 | 0.14 | 0.14 |
| 0°CE*(c) | 24.1 | 19.8 | 19.8 | 19.8 | 19.8 | 19.8 |
| T(c) [tan δ peak temperature] (°C) | -2.0 | -4.0 | -4.0 | -4.0 | -4.0 | -4.0 |
| H(c) [Hardness] | 47 | 47 | 47 | 47 | 47 | 47 |
| M300(c) (MPa) | 5.1 | 5.1 | 5.1 | 5.1 | 5.1 | 5.1 |
| Shoulder part (compounding) | S1 | S1 | S1 | S2 | S3 | S4 |
| Compounding amount of SBR (part by mass) | 60 | 60 | 60 | 80 | 100 | 100 |
| Compounding amount of carbon black (part by mass) | 65 | 65 | 65 | 65 | 65 | 80 |
| Compounding amount of resin (part by mass) | - | - | - | - | - | - |
| 70°C tan δ(s) | 0.21 | 0.21 | 0.21 | 0.22 | 0.23 | 0.24 |
| 0°CE*(s) | 20.5 | 20.5 | 20.5 | 21.4 | 21.1 | 21.5 |
| T(s) [tan δ peak temperature] (°C) | -26.0 | -26.0 | -26.0 | -17.0 | -20.0 | -40.0 |
| H(s) [Hardness] | 46 | 46 | 46 | 44 | 43 | 46 |
| M300(s) (MPa) | 3.9 | 3.9 | 3.9 | 3.3 | 2.8 | 3.9 |
| D [thickness of interface part] (mm) | 5.0 | 9.0 | 7.5 | 7.5 | 7.5 | 7.5 |
| Degree α (°) | 100 | 100 | 100 | 100 | 100 | 100 |
| Inequality (1): 70°C tan δ(s)/70°C tan δ(c) | 1.40 | 1.50 | 1.50 | 1.57 | 1.64 | 1.71 |

(continued)

| | Example | | | | | |
|---|---|---|---|---|---|---|
| | 8 | 9 | 10 | 11 | 12 | 13 |
| Inequality (2): 0°CE*(s)/ 0°CE*(c) | 0.85 | 1.04 | 1.04 | 1.08 | 1.07 | 1.09 |
| Inequality (3): 70°C tan $\delta$(s)/ 70°C tan $\delta$(c)/D | 0.28 | 0.17 | 0.20 | 0.21 | 0.22 | 0.23 |
| Inequality (4): T(c) - T(s) | 24.0 | 22.0 | 22.0 | 13.0 | 16.0 | 36.0 |
| Inequality (5): H(s)/H(c) | 0.98 | 0.98 | 0.98 | 0.94 | 0.91 | 0.98 |
| Inequality (6): M300(s)/M300(c) | 0.76 | 0.76 | 0.76 | 0.65 | 0.55 | 0.76 |
| Interface peeling resistance | 134 | 104 | 108 | 110 | 114 | 120 |

| | Example | | | Comparative example | | |
|---|---|---|---|---|---|---|
| | 14 | 15 | 16 | 1 | 2 | 3 |
| Center part (compounding) | C2 | C2 | C2 | C1 | C1 | C1 |
| Compounding amount of silica (part by mass) | 75 | 75 | 75 | 80 | 80 | 80 |
| 70°C tan $\delta$(c) | 0.14 | 0.14 | 0.14 | 0.15 | 0.15 | 0.15 |
| 0°CE*(c) | 19.8 | 19.8 | 19.8 | 24.1 | 24.1 | 24.1 |
| T(c) [tan $\delta$ peak temperature] (°C) | -4.0 | -4.0 | -4.0 | -2.0 | -2.0 | -2.0 |
| H(c) [Hardness] | 47 | 47 | 47 | 47 | 47 | 47 |
| M300(c) (MPa) | 5.1 | 5.1 | 5.1 | 5.1 | 5.1 | 5.1 |
| Shoulder part (compounding) | S5 | S5 | S1 | S6 | S7 | S8 |
| Compounding amount of SBR (part by mass) | 100 | 100 | 60 | 100 | 100 | 100 |
| Compounding amount of carbon black (part by mass) | 80 | 80 | 65 | 60 | 80 | 60 |
| Compounding amount of resin (part by mass) | 15 | 15 | - | 10 | 10 | 30 |
| 70°C tan $\delta$(s) | 0.26 | 0.26 | 0.21 | 0.18 | 0.25 | 0.19 |
| 0°CE*(s) | 20.9 | 20.9 | 20.5 | 21.1 | 40.1 | 38.9 |
| T(s) [tan $\delta$ peak temperature] (°C) | -34.0 | -34.0 | -26.0 | -5.0 | -6.0 | 2.0 |
| H(s) [Hardness] | 44 | 44 | 46 | 37 | 45 | 39 |
| M300(s) (MPa) | 2.4 | 2.4 | 3.9 | 1.6 | 3.2 | 2.1 |
| D [thickness of interface part] (mm) | 7.5 | 7.5 | 5.0 | 7.5 | 7.5 | 7.5 |
| Angle $\alpha$ (°) | 100 | 120 | 100 | 100 | 100 | 100 |
| Inequality (1): 70°C tan $\delta$(s)/70°C tan $\delta$(c) | 1.86 | 1.86 | 1.50 | 1.20 | 1.67 | 1.27 |
| Inequality (2): 0°CE*(s)/ 0°CE*(c) | 1.06 | 1.06 | 1.04 | 0.88 | 1.66 | 1.61 |
| Inequality (3): 70°C tan $\delta$(s)/ 70°C tan $\delta$(c)/D | 0.25 | 0.25 | 0.30 | 0.16 | 0.22 | 0.17 |
| Inequality (4): T(c) - T(s) | 30.0 | 30.0 | 22.0 | 3.0 | 4.0 | -4.0 |
| Inequality (5): H(s)/H c | 0.94 | 0.94 | 0.98 | 0.79 | 0.96 | 0.83 |
| Inequality (6): M300(s)/M300(c) | 0.47 | 0.47 | 0.76 | 0.31 | 0.63 | 0.41 |
| Interface peeling resistance | 125 | 128 | 132 | 100 | 93 | 88 |

<Embodiments>

Examples of embodiments of the present invention are described below.
The present invention provides a motorcycle tire as defined in claim 1.
Further beneficial embodiments of the motorcycle tire of the present invention are disclosed in the dependent claims 2 to 16.

REFERENCE SIGNS LIST

1  Motorcycle Tire
2  Tread part
2A  Tread surface
2e  Tread grounding end
3  Side wall part
4  Bead part
5  Bead core
6  Carcass
7  Belt layer
8  Tread rubber
8A  Center part
8B  Shoulder part
9  Conductive rubber layer (base pen)
100  Road surface
C  Tire equator
D  Thickness of interface part
L1  Junction line of interface
L2  Tangent line drawn at P1
P1  End point on the outside of interface in tire radial direction
P2  End point on the inside of interface in tire radial direction
P3  Midpoint of L1
X  Width of grounding surface
α  Shoulder part-side angle among angles formed between L1 and L2

It is an object of the present invention to provide a motorcycle tire with improved peeling resistance on the interface between a center part and a shoulder part of a tread part. Provided is a motorcycle tire comprising a tread part, the tread part comprising a center part having a tire equator, and a pair of shoulder parts having tread grounding ends, wherein a rubber composition constituting the center part comprises a filler (C), the filler (C) comprising silica, and a ratio of silica in the filler (C) is greater than 50% by mass, wherein a rubber composition constituting the shoulder parts comprises a filler (S), the filler (S) comprising carbon black, and a ratio of carbon black in the filler (S) is greater than 50% by mass, and wherein, when a loss tangent at 70°C of the rubber composition constituting the center part is defined as 70°C tan δ(c), a complex elastic modulus at 0°C of the rubber composition constituting the center part is defined as 0°CE*(c), a loss tangent at 70°C of the rubber composition constituting the shoulder parts is defined as 70°C tan δ(s), and a complex elastic modulus at 0°C of the rubber composition constituting the shoulder parts is defined as 0°CE*(s), 70°C tan δ(c) and 70°C tan δ(s) satisfy the following inequality (1), and 0°CE*(c) and 0°CE*(s) satisfy the following inequality (2).

$$(1)\ 1.30 < 70°C\ \tan δ(s)/70°C\ \tan δ(c)$$

$$(2)\ 0°CE^*(s)/0°CE^*(c) < 1.50$$

**Claims**

1. A motorcycle tire (1) comprising a tread part (2),

 the tread part (2) comprising a center part (8A) having a tire equator (C), and a pair of shoulder parts (8B) having tread grounding ends (2e); wherein the motorcycle tire is **characterized in that**
 a rubber composition constituting the center part (8A) comprises a filler (C), the filler (C) comprising silica, and a ratio of silica in the filler (C) is greater than 50% by mass,
 a rubber composition constituting the shoulder parts (8B) comprises a filler (S), the filler (S) comprising carbon black, and a ratio of carbon black in the filler (S) is greater than 50% by mass, and
 when a loss tangent at 70°C of the rubber composition constituting the center part (8A) is defined as 70°C tan δ(c),
 a complex elastic modulus at 0°C of the rubber composition constituting the center part (8A) is defined as 0°CE*(c),
 a loss tangent at 70°C of the rubber composition constituting the shoulder parts (8B) is defined as 70°C tan δ(s),
 the "70°C tan δ" is a loss tangent measured in an extension mode under a temperature of 70°C, a frequency of 10 Hz, an initial strain of 10%, a dynamic strain of 1%, and
a complex elastic modulus at 0°C of the rubber composition constituting the shoulder parts (8B) is defined as 0°CE*(s),
the "0°C E*" is a complex elastic modulus measured in an extension mode under a temperature of 0°C, a frequency of 10 Hz, an initial strain of 5%, a dynamic strain of 1% and
70°C tan δ(c) and 70°C tan δ(s) satisfy the following inequality (1)

$$(1) \quad 1.30 < 70°C \tan δ(s)/70°C \tan δ(c)$$

and
0°CE*(c) and 0°CE*(s) satisfy the following inequality (2)

$$(2) \quad 0°CE^*(s)/0°CE^*(c) < 1.50$$

2. The motorcycle tire of claim 1, wherein a left side of the inequality (1) is 1.35.

3. The motorcycle tire of claim 1 or 2, wherein a right side of the inequality (2) is 1.40.

4. The motorcycle tire of any one of claims 1 to 3, wherein a thickness (D) of an interface part between the center part (8A) and each shoulder part (8B) on a tire meridian cross section is greater than 4.0 mm and less than 10.0 mm.

5. The motorcycle tire motorcycle of any one of claims 1 to 4, wherein a rubber component in the rubber composition constituting the shoulder parts (8B) comprises greater than 70% by mass of a styrene-butadiene rubber.

6. The motorcycle tire of any one of claims 1 to 5, wherein a content of the filler (S) in the rubber composition constituting the shoulder parts (8B) is greater than 50 parts by mass based on 100 parts by mass of a rubber component.

7. The motorcycle tire of any one of claims 1 to 6, wherein a content of carbon black in the rubber composition constituting the shoulder parts (8B) is greater than 50 parts by mass based on 100 parts by mass of a rubber component.

8. The motorcycle tire of any one of claims 1 to 7, wherein the rubber composition constituting the shoulder parts (8B) comprises greater than 5 parts by mass and less than 40 parts by mass of resin based on 100 parts by mass of a rubber component.

9. The motorcycle tire of claim 8, wherein the resin comprises an aromatic resin.

10. The motorcycle tire of any one of claims 1 to 9, wherein a content of the filler (C) in the rubber composition constituting the center part (8A) is greater than 60 parts by mass based on 100 parts by mass of a rubber component.

11. The motorcycle tire of any one of claims 1 to 10, wherein a content of silica in the rubber composition constituting the center part (8A) is greater than 60 parts by mass based on 100 parts by mass of a rubber component.

12. The motorcycle tire of any one of claims 1 to 11, wherein, when a thickness (D) (mm) of the interface part between the center part (8A) and each shoulder part (8B) on a tire meridian cross section is defined as D, D and the 70°C tan δ (s)/70°C tan δ(c) satisfy the following relationship.

$$(3) \quad 70°C \tan δ(s)/70°C \tan δ(c)/D ≥ 0.18$$

13. The motorcycle tire of any one of claims 1 to 12, wherein, among angles formed between a junction line on the interface (L1) between the center part (8A) and each shoulder part (8B) and a tangent line (L2) drawn at an intersection (P1) at which the junction line and a grounding surface intersect with each other, on the tire meridian cross section, a degree (α) of a shoulder part-side angle is greater than 90°.

14. The motorcycle tire of any one of claims 1 to 13, wherein, when a tan δ peak temperature (°C) of the rubber composition constituting the center part (8A) is defined as T(c) and a tan δ peak temperature (°C) of the rubber composition constituting the shoulder parts (8B) is defined as T(s), T(c) and T(s) satisfy the following relationship.

$$(4)\ T(c) - T(s) > 0$$

**15.** The motorcycle tire of any one of claims 1 to 14, wherein, when hardness of the rubber composition constituting the center part (8A) is defined as H(c) and hardness of the rubber composition constituting the shoulder parts (8B) is defined as H(s), H(c) and H(s) satisfy the following relationship.

$$(5)\ H(s)/H(c) < 1.00$$

**16.** The motorcycle tire of any one of claims 1 to 15, wherein, when stress (MPa) at 300% elongation of the rubber composition constituting the center part (8A) is defined as M300(c) and stress (MPa) at 300% elongation of the rubber composition constituting the shoulder parts (8B) is defined as M300(s), M300(c) and M300(s) satisfy the following relationship.

$$(6)\ M300(s)/M300(c) < 1.00$$

**Patentansprüche**

**1.** Motorradreifen (1), umfassend einen Laufflächenteil (2),
der Laufflächenteil (2) umfasst einen Zentralteil (8A), der einen Reifenäquator (C) aufweist, und ein Paar von Schulterteilen (8B), die Laufflächen-Bodenkontaktenden (2e) aufweisen;

wobei der Motorradreifen **gekennzeichnet ist durch**

eine Gummizusammensetzung, die den Zentralteil (8A) bildet, einen Füllstoff (C) umfasst, der Füllstoff (C) Silica umfasst, und ein Silicaverhältnis in dem Füllstoff (C) größer als 50 Masse-% ist,
eine Gummizusammensetzung, die die Schulterteile (8B) bildet, einen Füllstoff (S) umfasst, der Füllstoff (S) Ruß umfasst, und ein Rußverhältnis in dem Füllstoff (S) größer als 50 Masse-% ist, und
wenn eine Verlusttangente der Gummizusammensetzung, die den Zentralteil (8A) bildet, bei 70°C als 70°C tan $\delta$(c) definiert ist,
ein komplexes Elastizitätsmodul der Gummizusammensetzung, die den Zentralteil (8A) bildet, bei 0°C als 0°CE*(c) definiert ist,
eine Verlusttangente der Gummizusammensetzung, die die Schulterteile (8B) bildet, bei 70°C als 70°C tan $\delta$ (s) definiert ist,

die "70°C tan $\delta$" eine Verlusttangente ist, die in einem Erweiterungsmodus unter einer Temperatur von 70°C, einer Frequenz von 10 Hz, einer Anfangsspannung von 10%, einer dynamischen Spannung von 1%, gemessen wurde, und
ein komplexes Elastizitätsmodul von der Gummizusammensetzung, die die Schulterteile (8B) bildet, bei 0°C als 0°CE*(s) definiert ist,
das "0°CE*" ein komplexes Elastizitätsmodul ist, das in einem Erweiterungsmodus unter einer Temperatur von 0°C, einer Frequenz von 10 Hz, einer Anfangsspannung von 5%, einer dynamischen Spannung von 1%, gemessen wurde, und
70°C tan $\delta$(c) und 70°C tan $\delta$(s) die folgende Ungleichung (1) erfüllen

$$(1)\ 1{,}30 < 70°C\ \tan\ \delta(s)/70°C\ \tan\ \delta(c),$$

und
0°CE*(c) und 0°CE*(s) die folgende Ungleichung (2) erfüllen.

$$(2)\ 0°CE^*(s)/0°CE^*(c) < 1{,}50$$

**2.** Motorradreifen nach Anspruch 1, wobei eine linke Seite der Ungleichung (1) 1,35 ist.

**3.** Motorradreifen nach Anspruch 1 oder 2, wobei eine rechte Seite der Ungleichung (2) 1,40 ist.

**4.** Motorradreifen nach einem der Ansprüche 1 bis 3, wobei die Dicke (D) von einem Schnittstellenteil zwischen dem Zentralteil (8A) und jedem Schulterteil (8B) auf einem Reifenmeridianquerschnitt größer als 4,0 mm und kleiner als 10,0 mm ist.

**5.** Motorradreifen nach einem der Ansprüche 1 bis 4, wobei eine Gummikomponente in der Gummizusammensetzung, die die Schulterteile (8B) bildet, mehr als 70 Masse-% von einem Styrol-Butadien-Gummi umfasst.

**6.** Motorradreifen nach einem der Ansprüche 1 bis 5, wobei ein Gehalt von dem Füllstoff (S) in der Gummizusammensetzung, die die Schulterteile (8B) bildet, mehr als 50 Masseteile, basierend auf 100 Masseteilen von einer Gummikomponente, ist.

**7.** Motorradreifen nach einem der Ansprüche 1 bis 6, wobei ein Gehalt von Ruß in der Gummizusammensetzung, die die Schulterteile (8B) bildet, größer als 50 Masseteile, basierend auf 100 Masseteilen von einer Gummikomponente, ist.

**8.** Motorradreifen nach einem der Ansprüche 1 bis 7, wobei die Gummizusammensetzung, die die Schulterteile (8B) bildet, mehr als 5 Masseteile und weniger als 40 Masseteile von Harz, basierend auf 100 Masseteilen von einer Gummikomponente, umfasst.

**9.** Motorradreifen nach Anspruch 8, wobei das Harz ein aromatisches Harz umfasst.

**10.** Motorradreifen nach einem der Ansprüche 1 bis 9, wobei ein Gehalt von dem Füllstoff (C) in der Gummizusammensetzung, die den Zentralteil (8A) bildet, mehr als 60 Masseteile, basierend auf 100 Masseteilen von einer Gummikomponente, ist.

**11.** Motorradreifen nach einem der Ansprüche 1 bis 10, wobei ein Gehalt von Silica in der Gummizusammensetzung, die den Zentralteil (8A) bildet, mehr als 60 Masseteile, basierend auf 100 Masseteilen einer von einer Gummikomponente, ist.

**12.** Motorradreifen nach einem der Ansprüche 1 bis 11, wobei, wenn eine Dicke (D) (mm) von dem Schnittstellenteil zwischen dem Zentralteil (8A) und jedem Schulterteil (8B) auf einem Reifenmeridianquerschnitt als D definiert ist, erfüllen D und 70°C tan $\delta$(s)/70°C tan $\delta$(c) die folgende Beziehung.

$$(3) \quad 70°C \ \tan \delta(s)/70°C \ \tan \delta(c)/D \geq 0{,}18$$

**13.** Motorradreifen nach einem der Ansprüche 1 bis 12, wobei unter Winkeln, die zwischen einer Grenzlinie der Schnittstelle (L1), zwischen dem Zentralteil (8A) und jedem Schulterteil (8B) und einer Tangentenlinie (L2), die an der Schnittstelle (P1) gezeichnet ist, bei welcher die Grenzlinie und eine Bodenkontaktoberfläche miteinander überschneiden, auf dem Reifenmeridianquerschnitt gebildet sind, ein Grad ($\alpha$) von einem Schulterteil-Seitenwinkel größer als 90° ist.

**14.** Motorradreifen nach einem der Ansprüche 1 bis 13, wobei, wenn eine tan $\delta$-Peaktemperatur (°C) von der Gummizusammensetzung, die den Zentralteil (8A) bildet, als T(c) definiert ist und eine tan $\delta$-Peaktemperatur (°C) von der Gummizusammensetzung, die die Schulterteile (8B) bildet, als T(s) definiert ist, erfüllen T(c) und T(s) die folgende Beziehung.

$$(4) \ T(c) - T(s) > 0$$

**15.** Motorradreifen nach einem der Ansprüche 1 bis 14, wobei, wenn die Härte der Gummizusammensetzung, die den Zentralteil (8A) bildet, als H(c) definiert ist und die Härte der Gummizusammensetzung, die die Schulterteile (8B) bildet, als H(s) definiert ist, erfüllen H (c) und H (s) die folgende Beziehung.

$$(5) \ H(s)/H(c) < 1{,}00$$

**16.** Motorradreifen nach einem der Ansprüche 1 bis 15, wobei, wenn die Spannung (MPa) bei 300% Dehnung der Gummizusammensetzung, die den Zentralteil (8A) bildet, als M300(c) definiert ist und die Spannung (MPa) bei 300 % Dehnung der Gummizusammensetzung, die die Schulterteile (8B) bildet, als M300(s) definiert ist, erfüllen M300(c) und M300(s) die folgende Beziehung.

$$(6)\ M300(s)/M300(c) < 1{,}00$$

## Revendications

1. Pneu de moto (1) comprenant une bande de roulement (2),

   la partie de bande de roulement (2) comprenant une partie centrale (8A) ayant un équateur de pneu (C), et une paire de parties d'épaulement (8B) ayant des extrémités de contact de la bande de roulement (2e) ;
   dans lequel le pneu de moto est **caractérisé en ce que**
   une composition de caoutchouc constituant la partie centrale (8A) comprend une charge (C), la charge (C) comprenant de la silice, et un rapport de silice dans la charge (C) est supérieur à 50 % en masse,
   une composition de caoutchouc constituant les parties d'épaulement (8B) comprend une charge (S), la charge (S) comprenant du noir de carbone, et un rapport de noir de carbone dans la charge (S) est supérieur à 50 % en masse, et
   lorsqu'une tangente de perte à 70°C de la composition de caoutchouc constituant la partie centrale (8A) est définie comme 70°C tan $\delta$(c), un module élastique complexe à 0°C de la composition de caoutchouc constituant la partie centrale (8A) est défini comme 0°CE*(c), une tangente de perte à 70°C de la composition de caoutchouc constituant les parties d'épaulement (8B) est définie comme 70°C tan $\delta$(s), la "70°C tan $\delta$" est une tangente de perte mesurée en mode extension à une température de 70°C, une fréquence de 10 Hz, une déformation initiale de 10 %, une déformation dynamique de 1 %, et un module élastique complexe à 0°C de la composition de caoutchouc constituant les parties d'épaulement (8B) est défini comme 0°CE*(s), le "0°CE*" est un module élastique complexe mesuré en mode extension à une température de 0°C, une fréquence de 10 Hz, une déformation initiale de 5 %, une déformation dynamique de 1 % et 70°C tan $\delta$(c) et 70°C tan $\delta$(s) satisfont à l'inégalité suivante (1)

   $$(1)\ 1{,}30 < 70°C\ tan\ \delta(s)/70°C\ tan\ \delta(c)$$

   et
   0°CE*(c) et 0°CE*(s) satisfont à l'inégalité suivante (2)

   $$(2)\ 0°CE^*(s)/0°CE^*(c) < 1{,}50$$

2. Pneu de moto selon la revendication 1, dans lequel un côté gauche de l'inégalité (1) est 1,35.

3. Pneu de moto selon la revendication 1 ou 2, dans lequel un côté droit de l'inégalité (2) est 1,40.

4. Pneu de moto selon l'une quelconque des revendications 1 à 3, dans lequel une épaisseur (D) d'une partie d'interface entre la partie centrale (8A) et chaque partie d'épaulement (8B) sur une section transversale méridienne du pneu est supérieure à 4,0 mm et inférieure à 10,0 mm.

5. Pneu de moto selon l'une quelconque des revendications 1 à 4, dans lequel un composant de caoutchouc dans la composition de caoutchouc constituant les parties d'épaulement (8B) comprend plus de 70% en masse d'un caoutchouc styrène-butadiène.

6. Pneu de moto selon l'une quelconque des revendications 1 à 5, dans lequel une teneur en charge (S) dans la composition de caoutchouc constituant les parties d'épaulement (8B) est supérieure à 50 parties en masse sur la base de 100 parties en masse d'un composant de caoutchouc.

7. Pneu de moto selon l'une quelconque des revendications 1 à 6, dans lequel une teneur en noir de carbone dans la composition de caoutchouc constituant les parties d'épaulement (8B) est supérieure à 50 parties en masse sur la base de 100 parties en masse d'un composant de caoutchouc.

8. Pneu de moto selon l'une quelconque des revendications 1 à 7, dans lequel la composition de caoutchouc constituant les parties d'épaulement (8B) comprend plus de 5 parties en masse et moins de 40 parties en masse de résine sur la base de 100 parties en masse d'un composant de caoutchouc.

9. Pneu de moto selon la revendication 8, dans lequel la résine comprend une résine aromatique.

10. Pneu de moto selon l'une quelconque des revendications 1 à 9, dans lequel une teneur en charge (C) dans la composition de caoutchouc constituant la partie centrale (8A) est supérieure à 60 parties en masse sur la base de 100 parties en masse d'un composant de caoutchouc.

11. Pneu de moto selon l'une quelconque des revendications 1 à 10, dans lequel une teneur en silice dans la composition de caoutchouc constituant la partie centrale (8A) est supérieure à 60 parties en masse sur la base de 100 parties en masse d'un composant de caoutchouc.

12. Pneu de moto selon l'une quelconque des revendications 1 à 11, dans lequel, lorsqu'une épaisseur (D) (mm) de la partie d'interface entre la partie centrale (8A) et chaque partie d'épaulement (8B) sur une section transversale méridienne du pneu est définie comme D, D et 70°C tan $\delta$(s)/70°C tan $\delta$(c) satisfont à la relation suivante.

$$(3) \; 70°C \; tan \; \delta(s)/70°C \; tan \; \delta(c)/D \geq 0,18$$

13. Pneu de moto selon l'une quelconque des revendications 1 à 12, dans lequel, parmi des angles formés entre une ligne de jonction sur l'interface (L1) entre la partie centrale (8A) et chaque partie d'épaulement (8B) et une ligne tangente (L2) tracée à une intersection (P1) à laquelle la ligne de jonction et une surface de contact se croisent l'une avec l'autre, sur la section transversale méridienne du pneu, un degré ($\alpha$) d'un angle de côté partie d'épaulement est supérieur à 90°.

14. Pneu de moto selon l'une quelconque des revendications 1 à 13, dans lequel, lorsqu'une température de pointe tan $\delta$ (°C) de la composition de caoutchouc constituant la partie centrale (8A) est définie comme T(c) et qu'une température de pointe tan $\delta$ (°C) de la composition de caoutchouc constituant les parties d'épaulement (8B) est définie comme T(s), T(c) et T(s) satisfont à la relation suivante.

$$(4) \; T(c) - T(s) > 0$$

15. Pneu de moto selon l'une quelconque des revendications 1 à 14, dans lequel, lorsqu'une dureté de la composition de caoutchouc constituant la partie centrale (8A) est définie comme H(c) et qu'une dureté de la composition de caoutchouc constituant les parties d'épaulement (8B) est définie comme H(s), H(c) et H(s) satisfont à la relation suivante.

$$(5) \; H(s)/H(c) < 1,00$$

16. Pneu de moto selon l'une quelconque des revendications 1 à 15, dans lequel, lorsqu'une contrainte (MPa) à 300 % d'allongement de la composition de caoutchouc constituant la partie centrale (8A) est définie comme M300(c) et qu'une contrainte (MPa) à 300 % d'allongement de la composition de caoutchouc constituant les parties d'épaulement (8B) est définie comme M300(s), M300(c) et M300(s) satisfont à la relation suivante.

$$(6) \; M300(s)/M300(c) < 1,00$$

# FIG. 1

# FIG.2

# FIG.3

**EP 4 265 436 B1**

**REFERENCES CITED IN THE DESCRIPTION**

**Patent documents cited in the description**

- JP 2011189808 A
- US 2014378575 A1
- US 9248702 B2
- US 2004244894 A1